(19) **Europäisches Patentamt** / **European Patent Office** / **Office européen des brevets**

(11) **EP 3 778 741 B1**

(12) **EUROPEAN PATENT SPECIFICATION**

(45) Date of publication and mention
of the grant of the patent:
**04.03.2026 Bulletin 2026/10**

(21) Application number: **19786182.6**

(22) Date of filing: **11.04.2019**

(51) International Patent Classification (IPC):
*C08J 9/16* (2006.01)   *C08J 9/06* (2006.01)
*C08J 9/14* (2006.01)   *C08J 9/18* (2006.01)
*C08J 9/228* (2006.01)   *C08J 9/00* (2006.01)

(52) Cooperative Patent Classification (CPC):
**C08J 9/16; C08J 9/0066; C08J 9/141; C08J 9/228;**
C08J 2201/034; C08J 2203/14; C08J 2203/182;
C08J 2325/06

(86) International application number:
**PCT/JP2019/015776**

(87) International publication number:
**WO 2019/198790 (17.10.2019 Gazette 2019/42)**

(54) **EXPANDABLE THERMOPLASTIC RESIN PARTICLES**

EXPANDIERBARE THERMOPLASTISCHE HARZTEILCHEN

PARTICULES EXPANSIBLES DE RÉSINE THERMOPLASTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.04.2018 JP 2018076193**

(43) Date of publication of application:
**17.02.2021 Bulletin 2021/07**

(73) Proprietor: **Kaneka Corporation
Osaka-shi, Osaka 530-8288 (JP)**

(72) Inventors:
• **SAKAMOTO, Ryohei**
**Settsu-shi, Osaka 566-0072 (JP)**
• **KUTSUMIZU, Ryuta**
**Settsu-shi, Osaka 566-0072 (JP)**
• **MARUHASHI, Shotaro**
**Settsu-shi, Osaka 566-0072 (JP)**
• **YANO, Yoshihito**
**Settsu-shi, Osaka 566-0072 (JP)**
• **NEIWA, Yuki**
**Settsu-shi, Osaka 566-0072 (JP)**

(74) Representative: **Vossius & Partner
Patentanwälte Rechtsanwälte mbB
Siebertstrasse 3
81675 München (DE)**

(56) References cited:
WO-A1-2015/137363   WO-A1-2017/043618
WO-A1-2017/043618   WO-A2-2010/041936
JP-A- 2010 222 546   JP-A- 2013 121 998
JP-A- 2013 123 851   JP-A- 2013 514 397
JP-A- 2013 525 537   JP-A- 2014 148 661
JP-A- 2015 101 702   JP-A- 2018 502 204
JP-B2- 6 216 506   US-A1- 2015 175 765
US-A1- 2015 353 701

## Description

Technical Field

The present invention relates to expandable thermoplastic resin particles which contain graphite.

Background Art

A thermoplastic resin foamed molded product, which is obtained by use of expandable thermoplastic resin particles, is well-balanced foam having, e.g., light weight, heat insulating property and shock-absorbing property. Conventionally, the thermoplastic resin foamed molded product has been widely used, e.g., as a food container box, a cool box, a cushioning material and a heat insulating material for houses.

In recent years, because of problems such as global warming, there is growing awareness for energy conservation by improving heat insulating properties of not only buildings such as a house but also automobiles. Especially with regard to heat insulating materials for automotive use, heavy heat insulating materials result in a reduction in fuel efficiency rather than saving energy, and therefore there is a need to achieve both lightness and heat insulating property.

Generally, a thermoplastic resin foamed molded product with an expansion ratio of not less than 40 times has a higher thermal conductivity and accordingly undergoes greater degradation in heat insulating property, as the expansion ratio increases. It is therefore desirable to reduce the thermal conductivity of such a thermoplastic resin foamed molded product in order to achieve both high heat insulating property and lightness.

A known method of reducing thermal conductivity is a method in which a radiative heat transfer inhibitor (e.g., graphite) is used in a styrene-based resin foamed molded product (see, for example, Patent Literatures 1 to 4). The radiative heat transfer inhibitor is a substance which is capable of inhibiting radiative heat transfer among heat transfer mechanisms that are transmitted in a foamed molded product. The radiative heat transfer inhibitor has the effect of achieving a reduction in thermal conductivity of the foamed molded product as compared with an additive-free foamed molded product that is identical to foamed molded product in terms of resin, blowing agent, cell structure, and density. Patent Literature 5 discloses expandable styrene resin particles containing graphite, which have specific physical properties, and wherein the graphite content is 2.0-8.0% by weight per 100% by weight of the expandable styrene resin particles, and the graphite has an average particle diameter of 2.5-9 $\mu$m.

Citation List

[Patent Literature]

[Patent Literature 1]
International Publication No. WO2017/043618
[Patent Literature 2]
Japanese Patent Application Publication, Tokukai, No. 2013-75941
[Patent Literature 3]
Japanese Patent Application Publication, Tokukai, No. 2005-2268
[Patent Literature 4]
Japanese Translation of PCT International Publication, Tokuhyo, No. 2005-506390
[patent Literature 5]
WO 2017/043618 A1 (KANEKA CORP [JP]) 16 March 2017 (2017-03-16)

Summary of Invention

Technical Problem

The conventional technique as described above, however, still has some room for improvement in terms of expandability and heat insulating property. In particular, the inventors of the present invention have found that, in a case where graphite having a mean particle size of less than 2.5 $\mu$m (small particle size) is used, there is still some room for improvement.

As such, an object of the present invention is to provide expandable thermoplastic resin particles which are capable of achieving both high heat insulating property and high expandability and which contain graphite having a mean particle size of less than 2.5 μm.

Solution to Problem

In view of such circumstances, the inventors have conducted much study, and found that, when the particle size distribution of graphite in expandable thermoplastic resin particles is controlled, (a) the expandable thermoplastic resin particles have low thermal conductivity, i.e., high heat insulating property, and also (b) the expandable thermoplastic resin particles have high expandability and therefore shrinkage of pre-expanded particles obtained from the expandable thermoplastic resin particles, immediately after pre-expansion, is reduced. On the basis of this finding, the inventors accomplished the present invention.

The present invention is defined by the claims. Specifically, an embodiment of the present invention relates to expandable thermoplastic resin particles containing graphite, a thermoplastic resin, and a blowing agent, wherein: a contained amount of the graphite is not less than 2.0 wt% and not more than 10.0 wt% with respect to 100 wt% of the expandable thermoplastic resin particles; the graphite in the expandable thermoplastic resin particles has a mean particle size of not less than 0.5 μm and less than 2.5 μm; and span "S", which indicates a spread of particle size distribution of the graphite in the expandable thermoplastic resin particles and which is represented by the following equation (1), is not more than 4.0:

$$S = (D90 - D10)/D50 \dots \text{Equation (1)},$$

where S represents the span indicative of the spread of the particle size distribution of the graphite, D90 represents 90% volume cumulative particle size, D10 represents 10% volume cumulative particle size, and D50 represents 50% volume cumulative particle size, the 50% volume cumulative particle size being the mean particle size.

Advantageous Effects of Invention

According to an embodiment of the present invention, it is possible to provide expandable thermoplastic resin particles that can give a thermoplastic resin foamed molded product which has both high expansion ratio and low thermal conductivity, i.e., high heat insulating property, despite their containing graphite having a mean particle size of less than 2.5 μm.

Brief Description of Drawings

Fig. 1 is an SEM image of a cut surface of a pressed product obtained by pressing a foamed molded product prepared in Comparative Example 1. Cross sections of graphite particles on the cut surface are seen in the SEM image.
Fig. 2 is an SEM image of a cut surface of a pressed product obtained by pressing a foamed molded product prepared in Example 1. Cross sections of graphite particles on the cut surface are seen in the SEM image.

Description of Embodiments

The following description will discuss embodiments of the present invention. The present invention is not, however, limited to these embodiments. The present invention is not limited to the configurations described below, but may be altered within the scope of the claims. The present invention also encompasses, in its technical scope, any embodiment or example derived by combining technical means disclosed in differing embodiments and Examples. Further, it is possible to form a new technical feature by combining the technical means disclosed in the respective embodiments. Any numerical range expressed as "*A* to *B*" in the present specification means "not less than *A* and not more than *B* (i.e., a range from A to B which includes both A and B)" unless otherwise stated.

[1. Technical idea of an embodiment of the present invention]

The inventors have developed expandable styrene-based resin particles achieving both high heat insulating property and high expansion ratio, by using graphite having a mean particle size of 2.5 μm to 9 μm and employing a laser scattering intensity per unit solution concentration of graphite of not less than 6 {%/(mg/ml)}/wt%, as disclosed in Patent Literature 1. It appears that when the laser scattering intensity is high, the number of graphite particles in the resin is large. It is inferred from this that, when the laser scattering intensity is equal to or greater than a specific value, graphite is in a highly dispersed state. However, for cases where graphite having a mean particle size less of than 2.5 $\mu$m (small particle size) is used, there has still been some room for improvement.

Furthermore, Patent Literatures 2 to 4 do not even disclose producing expandable resin particles with use of graphite having a mean particle size of less than 2.5 $\mu$m.

As such, there has been no proposal of expandable thermoplastic resin particles which, when graphite having a mean particle size of less than 2.5 $\mu$m is used, can achieve both high heat insulating property and high expandability.

An embodiment of the present invention was made in view of the foregoing issues, and an object thereof is to provide novel expandable thermoplastic resin particles which contain graphite having a mean particle size of less than 2.5 $\mu$m and which can achieve both high heat insulating property and high expandability. In other words, an object of an embodiment of the present invention is to provide novel expandable thermoplastic resin particles that can give thermoplastic resin pre-expanded particles and a thermoplastic resin foamed molded product each of which contains graphite having a mean particle size less than 2.5 $\mu$m and each of which has both high heat insulating property and high expandability.

The following description will discuss, in detail, embodiments of expandable thermoplastic resin particles and embodiments of a method of producing expandable thermoplastic resin particles in accordance with the present invention.

[2. Expandable thermoplastic resin particles]

Expandable thermoplastic resin particles in accordance with an embodiment of the present invention contain graphite having a mean particle size of not less than 0.5 $\mu$m and less than 2.5 $\mu$m, in which the contained amount of the graphite is 2.0 to 10.0 wt% with respect to 100 wt% of the expandable thermoplastic resin particles, and span "S", which indicates the spread of particle size distribution of the graphite in the expandable thermoplastic resin particles, is not more than 4.0.

Note, here, that the span "S" is found from the following equation (1):

$$S = (D90\text{-}D10)/D50 \ ... \ Equation \ (1),$$

where D90 represents 90% volume cumulative particle size, D10 represents 10% volume cumulative particle size, and D50 represents 50% volume cumulative particle size, i.e., mean particle size.

Expandable thermoplastic resin particles in accordance with an embodiment of the present invention may be expressed as follows: expandable thermoplastic resin particles containing graphite, a thermoplastic resin, and a blowing agent, in which the contained amount of the graphite is not less than 2.0 wt% and not more than 10.0 wt% with respect to 100 wt% of the expandable thermoplastic resin particles, the graphite in the expandable thermoplastic resin particles has a mean particle size of not less than 0.5 $\mu$m and less than 2.5 $\mu$m, and span "S", which indicates the spread of particle size distribution of the graphite in the expandable thermoplastic resin particles and which is represented by the following equation (1), is not more than 4.0. Note, here, that the span "S" is found using the above-described equation (1). In the present specification, "expandable thermoplastic resin particles in accordance with an embodiment of the present invention" may be referred to as "the present expandable thermoplastic resin particles".

The present expandable thermoplastic resin particles have the above-described arrangement, and therefore are capable of achieving both high heat insulating property and high expandability. The phrase "the present expandable thermoplastic resin particles achieve high heat insulating property" means that, specifically, the present expandable thermoplastic resin particles achieve low thermal conductivity. Since the present expandable thermoplastic resin particles achieve high heat insulating property, it is possible to provide a thermoplastic resin foamed molded product having high heat insulating property, specifically, having low thermal conductivity. Since the present expandable thermoplastic resin particles have high expandability, it is possible to provide thermoplastic resin pre-expanded particles and a thermoplastic resin foamed molded product each having high expansion ratio. In other words, since the present expandable thermoplastic resin particles have high expandability, it is possible to provide thermoplastic resin pre-expanded particles having high expandability. Thermoplastic resin pre-expanded particles having high expandability can give a thermoplastic resin foamed molded product having high expansion ratio. Thermoplastic resin pre-expanded particles and a thermoplastic resin foamed molded product each having high expansion ratio are advantageous in that they are lightweight. In the present specification, "thermoplastic resin pre-expanded particles" may be referred to as "pre-expanded particles", and "thermoplastic resin foamed molded product" may be referred to as "foamed molded product".

In an embodiment of the present invention, the expandable thermoplastic resin particles may also contain, in addition to the thermoplastic resin and graphite, one or more components contained in general expandable thermoplastic resin particles. Specifically, the present expandable thermoplastic resin particles contain a thermoplastic resin, graphite, and a blowing agent, and may contain, as necessary, at least one optional component selected from the group consisting of radiative heat transfer inhibitors other than graphite, flame retardants, thermal stabilizers, radical generators, and other additives. It is preferable that the present expandable thermoplastic resin particles contain a thermoplastic resin, graphite, a blowing agent, and a flame retardant, and may further contain at least one selected from the group consisting of the foregoing optional components excluding flame retardants. More preferably, the present expandable thermoplastic resin particles contain a thermoplastic resin, graphite, a blowing agent, a flame retardant, and a thermal stabilizer, and may further contain at least one selected from the group consisting of the foregoing optional components excluding flame retardants and thermal stabilizers. Even more preferably, the present expandable thermoplastic resin particles contain a thermoplastic resin, graphite, a blowing agent, a flame retardant, a thermal stabilizer, and a nucleating agent, and may further contain at least one selected from the group consisting of the foregoing optional components excluding flame retardants, thermal stabilizers, and nucleating agents.

(2-1. Thermoplastic resin)

The thermoplastic resin for use in an embodiment of the present invention is not particularly limited. Examples of the thermoplastic resin include: (a) styrene-based resins such as polystyrene (PS), styrene-acrylonitrile copolymers (AS), styrene-(meth)acrylic acid copolymers (heat-resistant PS), styrene-(meth)acrylic acid ester copolymers, styrene-butadiene copolymers (HIPS), N-phenylmaleimide-styrenemaleic anhydride terpolymer, and alloys (IP) of the terpolymer and AS; (b) vinyl-based resins such as polymethyl methacrylate, polyacrylonitrile-based resins, and vinyl chloride-based resins; (c) polyolefin-based resins such as polypropylene, polyethylene, ethylene-propylene copolymers, ethylene-propylene-butene terpolymers, and cycloolefin-based (co)polymers, and polyolefin-based resins whose rheological properties are controlled by introducing a branched structure or a crosslinked structure therein; (d) polyamide-based resins such as nylon 6, nylon 66, nylon 11, nylon 12, and MXD nylon; (e) polyester-based resins such as polyethylene terephthalate, polybutylene terephthalate, polyarylate, and polycarbonate, and aliphatic polyester-based resins such as polylactic acids; (f) engineering plastics such as polyphenylene ether-based resins (PPE), modified polyphenylene ether-based resins (modified PPE), polyoxymethylene-based resins, polyphenylene sulfide-based resins, polyphenylene sulfide-based resins, aromatic polyether-based resins, and polyether ether ketone resins. These can be used alone or in combination of two or more thereof. In particular, styrene-based resins are preferable, because styrene-based resins are inexpensive and also because expandable thermoplastic resin particles obtained from a styrene-based resin can be easily foamed and molded.

The styrene-based resin is not limited to a styrene homopolymer (polystyrene homopolymer), and may be a copolymer of (a) styrene and (b) one or more other monomers copolymerizable with styrene or one or more derivatives thereof (hereinafter referred to as "other monomer(s) or a derivative(s) thereof" for short), provided that the effects of an embodiment of the present invention are not impaired. Note, however, that brominated styrene-butadiene copolymers, which will be described later, are excluded from examples of the "thermoplastic resin" in the present specification.

Examples of the "other monomer(s) or a derivative(s) thereof" include: (a) styrene derivatives such as methylstyrene, dimethylstyrene, ethylstyrene, diethylstyrene, isopropylstyrene, bromostyrene, dibromostyrene, tribromostyrene, chlorostyrene, dichlorostyrene, and trichlorostyrene; (b) multifunctional vinyl compounds such as divinylbenzene; (c) (meth)acrylic acid ester compounds such as methyl acrylate, methyl methacrylate, ethyl acrylate, ethyl methacrylate, butyl acrylate, and butyl methacrylate; (d) vinyl-cyanide compounds such as (meth)acrylonitrile; (e) diene-based compounds such as butadiene and derivatives thereof; (f) unsaturated carboxylic acid anhydrides such as maleic anhydride and itaconic acid anhydride; and N-alkylsubstituted maleimide compounds such as N-methylmaleimide, N-butylmaleimide, N-cyclohexylmaleimide, N-phenylmaleimide, N-(2)-chlorophenylmaleimide, N-(4)-bromophenylmaleimide, and N-(1)-naphthylmaleimide. These can be used alone or in combination of two or more thereof.

The styrene-based resin for use in an embodiment of the present invention is not limited to a styrene homopolymer and/or a copolymer of (i) styrene and (ii) other monomer(s) copolymerizable with styrene or a derivative(s) thereof. The styrene-based resin may be a blend of the following (a) and (b), provided that the effects of an embodiment of the present invention are not impaired:

(a) a styrene homopolymer, and/or, a copolymer of styrene and the other monomer(s) or a derivative(s) thereof; and
(b) a homopolymer of the other monomer or a derivative thereof, or, a copolymer of the other monomer(s) and/or the derivative(s) thereof.

In an embodiment of the present invention, the thermoplastic resin preferably contains such a styrene-based resin.

It is preferable that the thermoplastic resin for use in an embodiment of the present invention mainly contains a styrene-based resin. The styrene-based resin may have blended therein, for example, diene-based rubber-reinforced polystyrene, acrylic rubber-reinforced polystyrene, and/or a polyphenylene ether-based resin. As used herein, the term "mainly" refers to, specifically, preferably not less than 50 wt%, more preferably not less than 60 wt%, even more preferably not less than 80 wt%, with respect to 100 wt% of the thermoplastic resin. In terms of recyclability, a preferred upper limit is 100 wt% or less. Note, however, that this does not mean excluding the use of other resins in combination with the styrene-based resin.

Among examples of the styrene-based resin, a styrene homopolymer, a styrene-acrylonitrile copolymer, and a styrene-butyl acrylate copolymer are preferable because of (i) being relatively inexpensive, (ii) being able to be foamed and molded using, e.g., low-pressure steam without use of a special method, and (iii) being well balanced in heat insulating property, flame retardancy, and shock-absorbing property.

(2-2. Graphite)

The following discusses graphite for use in an embodiment of the present invention. When graphite is contained as a radiative heat transfer inhibitor in expandable thermoplastic resin particles, the expandable thermoplastic resin particles are thereby capable of giving pre-expanded particles and a thermoplastic resin foamed molded product each having excellent heat insulating property. The "radiative heat transfer inhibitor" means a substance which has the property of reflecting, scattering, or absorbing light in an infrared region (e.g., a wavelength region of approximately 0.8 $\mu$m to 100 $\mu$m).

Graphite for use in an embodiment of the present invention can be any known graphite. Examples of graphite include scale-like graphite, earthy graphite, spherical graphite, and artificial graphite. Note that the term "scale-like" herein also encompasses flake, slice, and plate shapes. These kinds of graphite can be used alone or in combination of two or more thereof. In particular, a graphite mixture containing scale-like graphite as a main component is preferable, and scale-like graphite is more preferable, because of their excellent radiative heat transfer inhibiting effect when used in a foamed molded product.

The graphite for use in expandable thermoplastic resin particles in accordance with an embodiment of the present invention has a mean particle size of not less than 0.5 $\mu$m and less than 2.5 $\mu$m. In order to reduce shrinkage of pre-expanded particles immediately after pre-expansion of the expandable thermoplastic resin particles, to prolong shelf life, and to achieve even higher expansion ratio, the mean particle size of graphite is preferably not less than 0.5 $\mu$m and less than 2.0 $\mu$m, even more preferably not less than 0.5 $\mu$m and less than 1.5 $\mu$m. The mean particle size of graphite herein is defined as below: measurement and analysis of particle size distribution are performed by laser diffractometry based on Mie theory in accordance with ISO13320:2009, JIS Z8825:2013; and a particle size D50 (i.e., 50% volume cumulative particle size), which is the point below which 50% by cumulative volume of all the particles is contained, is used as the mean particle size.

A reduction in shrinkage of pre-expanded particles immediately after pre-expansion of the expandable thermoplastic resin particles contributes to increasing the expansion ratio of the pre-expanded particles. In other words, expandable thermoplastic resin particles, whose shrinkage immediately after pre-expansion can be reduced, have high expandability. In other words, expandable thermoplastic resin particles which contain graphite having a mean particle size of not less than 0.5 $\mu$m and less than 2.5 $\mu$m have high expandability. In the present specification, the "effect of reducing shrinkage of pre-expanded particles immediately after pre-expansion of expandable thermoplastic resin particles" may be referred to as "shrinkage reducing effect".

As disclosed in the foregoing Patent Literature 1, laser scattering intensity can be used as an indicator of the degree of dispersion of graphite, and, it is estimated that, for expandable thermoplastic resin particles containing graphite of not smaller than 2.5 $\mu$m, the degree of dispersion of graphite is high when the laser scattering intensity has a specific value. On the contrary, for expandable thermoplastic resin particles containing graphite having a mean particle size of less than 2.5 $\mu$m, the same tendency does not necessarily hold true.

That is, for expandable thermoplastic resin particles containing graphite having a mean particle size of less than 2.5 $\mu$m, even if the laser scattering intensity satisfies the foregoing specific value, the degree of dispersion of graphite is not necessarily high, and the degree of dispersion of graphite may be low.

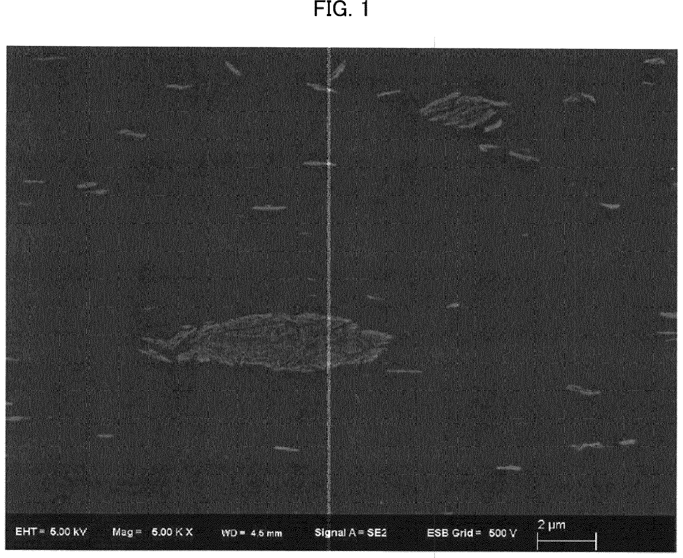

In view of such circumstances, the inventors have studied how graphite is dispersed in expandable thermoplastic resin particles, and found, on their own, that the particle size distribution of graphite present in the expandable thermoplastic resin particles is different from that in a case where graphite having a mean particle size of not less than 2.5 $\mu$m is used. Specifically, the inventors have found that, as illustrated in Fig. 1, aggregates which were not present before kneading have been generated due to the kneading, and that the D90 of graphite in the expandable thermoplastic resin particles is greater after kneading than before. Such a generation of aggregates during kneading is a phenomenon that is significantly seen in embodiments in which graphite having a mean particle size of less than 2.5 $\mu$m is used. The inventors have found, on their own, that, in a case where graphite having a mean particle size of less than 2.5 $\mu$m is used, aggregates may form during kneading and, as a result, the effect of reducing thermal conductivity, which is supposed to be achieved by graphite, is not achieved. Note that graphite before kneading is, for example, graphite as a raw material.

Graphite can also serve as foreign matter and can hinder achieving higher expansion ratio; therefore, use of graphite having a small particle size (e.g., mean particle size less than 2.5 $\mu$m) would be effective in achieving higher expansion ratio. The inventors, however, have found, on their own, that, even if graphite having a small particle size is used, aggregates are generated through kneading and thereby pre-expanded particles significantly shrink immediately after pre-expansion.

Such an aggregate is a collection of a plurality of graphite particles. It is therefore inferred that the generation of aggregates results in a reduction in surface area of graphite which is important for absorption and emission of radiative heat and, in turn, the thermal conductivity reducing effect, which is supposed to be achieved by graphite, becomes no longer obtainable. In addition, each aggregate is thicker than a single graphite particle. Therefore, the aggregates hinder the extension of cell membranes during expansion/foaming, and this makes it impossible to obtain pre-expanded particles and a foamed molded product each having high expansion ratio. It is inferred that buckling and breakage of cell membranes occur at aggregates and the shrinkage of pre-expanded particles immediately after pre-expansion is promoted.

Note that the present invention is not bound by any of the foregoing estimations and theory.

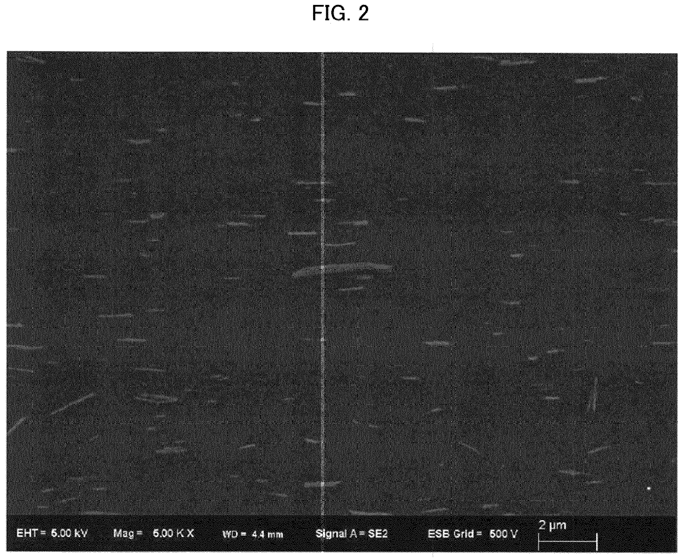

According to expandable thermoplastic resin particles in accordance with an embodiment of the present invention, the span "S", which indicates the spread of particle size distribution of graphite in the expandable thermoplastic resin particles, is not more than 4.0, and therefore, as illustrated in Fig. 2, the amount of graphite aggregates in the expandable thermoplastic resin particles is small. With this, when a foamed molded product is obtained by molding the expandable thermoplastic resin particles, a large thermal conductivity reducing effect is obtained, and, when pre-expanded particles are obtained by pre-expanding the expandable thermoplastic resin particles, a large effect of reducing the shrinkage of the pre-expanded particles immediately after pre-expansion is obtained. That is, the foamed molded product exhibits high expansion ratio and low thermal conductivity (i.e., high insulating property). A span "S" of not more than 4.0 indicates that, in a case where graphite having a mean particle size of less than 2.5 $\mu$m is used, the generation of coarse aggregates which were not present in graphite before kneading has been reduced. When the span "S" is not more than 3.0, it is possible to stably obtain high heat insulating property and high shrinkage reducing effect. When the span "S" is not more than 2.0, it is possible to achieve high heat insulating property and high shrinkage reducing effect more stably.

The span "S" is calculated using the following equation (1), from the mean particle size (50% volume cumulative particle size) D50, 10% volume cumulative particle size D10, and 90% volume cumulative particle size D90 of graphite in the expandable thermoplastic resin particles:

$$S = (D90-D10)/D50 \ldots \text{Equation (1),}$$

where D10 and D90 are measured in a similar manner to that described earlier as to the particle size D50.

For expandable thermoplastic resin particles in accordance with an embodiment of the present invention, it is preferable that the value obtained by dividing the D90 of graphite in the expandable thermoplastic resin particles by the D90 of graphite before kneading is not more than 2.0, more preferably not more than 1.0, because (i) the thermal conductivity reducing effect of graphite is obtained efficiently and (ii) the shrinkage reducing effect is obtained stably.

In an embodiment of the present invention, the amount of graphite aggregates can be reduced and the span "S" can be reduced to a desired value by, for example, improving kneading performance through selection of screws of a stirrer and an extruder, and/or improving the affinity between the thermoplastic resin and graphite. A specific example of a means to improve the affinity between the thermoplastic resin and graphite may be surface treatment of graphite, and/or addition of an appropriate dispersant. It is also preferable that graphite is thoroughly kneaded with the thermoplastic resin to obtain a graphite-containing masterbatch and then the masterbatch is used instead of using graphite as-is.

Expandable thermoplastic resin particles in accordance with an embodiment of the present invention contain graphite in an amount of not less than 2.0 wt% and not more than 10.0 wt% with respect to 100 wt% of the expandable thermoplastic resin particles, because the expansion ratios of pre-expanded particles and a foamed molded product can be controlled easily and because of a balance with the thermal conductivity reducing effect. In a case where the contained amount of graphite is not less than 2.0 wt%, a sufficient thermal conductivity reducing effect tends to be achieved. On the other hand, in a case where the contained amount of graphite is not more than 10.0 wt%, cell membranes are not easily broken during production of pre-expanded particles and a foamed molded product from expandable thermoplastic resin particles, so that high expansion ratio tends to be easily achieved and control of expansion ratio tends to be facilitated. It is preferable that the contained amount of graphite is not less than 3.0 wt% and not more than 8.0 wt%. In a case where the contained amount of graphite is not less than 3.0 wt%, a foamed molded product obtained from the expandable thermoplastic resin particles has lower thermal conductivity and therefore higher heat insulating property. In a case where the contained amount of graphite is not more than 8.0 wt%, the expandable thermoplastic resin particles have good expandability and a foamed molded product obtained from the expandable thermoplastic resin particles has good surface appearance.

(2-3. Laser scattering intensity)

For expandable thermoplastic resin particles in accordance with an embodiment of the present invention, it is preferable that the laser scattering intensity per unit solution concentration of graphite in the expandable thermoplastic resin particles is not less than 10 {%/(mg/ml)}/wt%. There is a tendency that, in a case where the laser scattering intensity is not less than 10 {%/(mg/ml)}/wt%, the degree of dispersion of the graphite is high. As a result, it is likely that the expandable thermoplastic resin particles, after formed into a foamed molded product, has a high thermal conductivity-reducing effect for the contained amount of graphite. Specifically, after the expandable thermoplastic resin particles are formed into a foamed molded product, the obtained foamed molded product is likely to have high expansion ratio and low thermal conductivity (i.e., high heat insulating property).

For expandable thermoplastic resin particles in accordance with an embodiment of the present invention, it is more preferable that the laser scattering intensity per unit solution concentration of graphite in the expandable thermoplastic resin particles is not less than 11 {%/(mg/ml)}/wt%. In a case where the laser scattering intensity is not less than 11 {%/(mg/ml)}/wt%, it is easy to obtain a larger thermal conductivity-reducing effect after the expandable thermoplastic resin particles are formed into a foamed molded product. Specifically, after the expandable thermoplastic resin particles are formed into a foamed molded product, the obtained foamed molded product is likely to have even lower thermal conductivity (i.e., even higher heat insulating property).

The laser scattering intensity per unit solution concentration of the graphite [{%/(mg/ml)}/wt%] is determined by: dividing a laser scattering intensity Ob (%) by a unit solution concentration (mg/ml) to obtain a quotient; and further dividing the quotient by the amount (wt%) of the graphite contained in the expandable styrene-based resin particles. The laser scattering intensity Ob (%) is determined by the following equation (2):

$$Ob\ (\%)\ =\ (1\text{-}Ls/Lb)\ \times\ 100\ \ldots\ Equation\ (2),$$

where Ls is the intensity of light transmitted through a solution that contains the expandable thermoplastic resin particles and a solvent (this intensity is measured by laser diffractometry using a laser beam at a wavelength of 632.8 nm), Lb is the intensity of light transmitted through the solvent measured by the laser diffractometry, and where the unit solution concentration is the concentration of the expandable thermoplastic resin particles in the solution. The solvent is, for example, toluene.

More specifically, the laser scattering intensity per unit solution concentration of graphite in accordance with an embodiment of the present invention is obtained as follows. First, a laser scattering intensity Ob (%) is found in accordance with the following equation (2) from (i) an intensity Lb of transmitted light obtained when a solvent (e.g., toluene) containing no measurement sample (expandable thermoplastic resin particles, graphite before kneading, or thermoplastic resin) is irradiated with a He-Ne laser beam having a wavelength of 632.8 nm and (ii) an intensity Ls of transmitted light obtained when a solution obtained by dispersing a predetermined weight of the measurement sample in the solvent is irradiated with a He-Ne laser beam having a wavelength of 632.8 nm.

$$Ob\ (\%)\ =\ (1\text{-}Ls/Lb)\times 100\ \ldots\ Equation\ (2)$$

Next, on the basis of the laser scattering intensity Ob (%) thus found using the equation (2), a laser scattering intensity per unit solution concentration {%/(mg/ml)} of the measurement sample is found. Then, the laser scattering intensity per unit solution concentration {%/(mg/ml)} thus found is divided by the amount (wt%) of graphite contained in the measurement sample having the predetermined weight. The laser scattering intensity thus found is the laser scattering intensity per unit solution concentration of graphite [{%/(mg/ml)}/wt%]. Note that the solvent is preferably toluene in a case where a resin in the expandable thermoplastic resin particles is styrene resin. In a case where the resin in the expandable thermoplastic resin particles is a resin other than styrene resin, the solvent is not particularly limited, provided that the solvent dissolves the resin.

(2-4. Blowing agent)

A blowing agent for use in an embodiment of the present invention is not particularly limited, but is preferably a volatile blowing agent, more preferably a C4-C6 hydrocarbon, from the viewpoint of achieving a good balance between expandability and product life as well as easily achieving high expansion ratio in actual use. In a case where a molecule of the blowing agent has 4 or more carbon atoms, volatility is small and therefore the blowing agent is not easily lost from the expandable thermoplastic resin particles. Accordingly, in actual use, a sufficient amount of the blowing agent remains in the expandable thermoplastic resin particles in an expanding/ foaming step. This allows achieving sufficient expandability, and facilitates achieving high expansion ratio. Further, in a case where a molecule of the blowing agent has 6 or less carbon atoms, the boiling point of the blowing agent is not too high. This tends to allow sufficient expandability to be easily achieved through heating at the time of pre-expansion, and accordingly allow high expansion ratio to be easily achieved. Examples of the C4-C6 hydrocarbon include hydrocarbons such as normal butane, isobutane, normal pentane, isopentane, neopentane, cyclopentane, normal hexane, and cyclohexane. One of these can be used alone or in combination of two or more thereof. Among those listed above, a C4 hydrocarbon and/or a C5 hydrocarbon are more preferably contained. In particular, it is preferable that the blowing agent in the present expandable thermoplastic resin particles contains at least two selected from the group consisting of C4-C6 hydrocarbons, and that one of the at least two is a C4 or C5 hydrocarbon, because this especially easily achieves high expansion ratio.

The amount of the blowing agent added in an embodiment of the present invention is preferably 4 to 10 parts by weight with respect to the combined amount of constituents of the expandable thermoplastic resin particles (note, however, that the blowing agent is excluded), that is, with respect to 100 parts by weight of a mixture of a thermoplastic resin, graphite, and other additive(s), excluding the blowing agent. In a case where the amount of the blowing agent added is within the above range, this enables achieving a better balance between expansion/foaming speed and expandability, and thus allows achieving high expansion ratio stably. In a case where the amount of the blowing agent added is not less than 4 parts by weight, sufficient expandability for expansion/foaming is achieved, and therefore high expansion ratio is easily achieved. This is likely to allow easily producing pre-expanded particles and a foamed molded product each having a high expansion ratio of 50 times or more. Further, in a case where the amount of the blowing agent is not more than 10 parts by weight, good flame retardancy as well as a reduction in time (molding cycle) for production of pre-expanded particles and a foamed molded product are achieved. This is likely to result in a reduction in production cost. Note that the amount of the blowing agent added in an embodiment of the present invention is more preferably 4.5 parts by weight to 9 parts by weight, even more preferably 5 parts by weight to 8 parts by weight.

(2-5. Flame retardant)

A flame retardant for use in expandable thermoplastic resin particles in accordance with an embodiment of the present invention is not particularly limited, and may be any flame retardant which is conventionally used in expandable thermoplastic resin particles. In particular, a bromine-based flame retardant, which has a high flame retardancy imparting effect, is preferable. Examples of the bromine-based flame retardant include: brominated bisphenol compounds such as 2,2-bis[4-(2,3-dibromo-2-methylpropoxy)-3,5-dibromophenyl]propane (also called tetrabromobisphenol A-bis(2,3-dibromo-2-methylpropyl ether)) and 2,2-bis[4-(2,3-dibromopropoxy)-3,5-dibromophenyl]propane (also called tetrabromobisphenol A-bis(2,3-dibromopropyl ether)); tetrabromocyclooctane; tris(2,3-dibromopropyl) isocyanurate; brominated butadiene-vinyl aromatic hydrocarbon copolymers (disclosed, for example, in Published Japanese Translation of PCT International Publication, Tokuhyo, No. 2009-516019) such as brominated styrene-butadiene block copolymers, brominated styrene-butadiene random copolymers, and brominated styrene-butadiene graft copolymers. These bromine-based flame retardants can be used alone or in combination of two or more thereof.

A bromine-based flame retardant has a bromine content of preferably not less than 0.8 wt%, more preferably not more than 5.0 wt%, with respect to the total amount (100 wt%) of expandable thermoplastic resin particles, because (i) expansion ratio can be easily controlled to a target expansion ratio and (ii) a good balance between properties such as flame retardancy can be achieved in cases where graphite is contained. In a case where the bromine content is not less than 0.8 wt%, a flame retardancy imparting effect tends to increase. In a case where the bromine content is not more than 5.0 wt%, pre-expanded particles and a foamed molded product which are obtained from the expandable thermoplastic resin particles are likely to have an increased strength. The bromine-based flame retardant is contained in the expandable thermoplastic resin particles so that the contained amount of bromine with respect to the total amount of the expandable thermoplastic resin particles is preferably 0.8 wt% to 5.0 wt%, more preferably 1.0 wt% to 3.5 wt%.

(2-6. Thermal stabilizer)

In expandable thermoplastic resin particles in accordance with an embodiment of the present invention, a thermal stabilizer contained allows preventing (i) degradation of flame retardancy due to decomposition of a bromine-based flame retardant during a production process and (ii) deterioration of the expandable thermoplastic resin particles.

The thermal stabilizer can be selected as appropriate in accordance with, e.g., type of a thermoplastic resin used, type and contained amount of a blowing agent, type and contained amount of a radiative heat transfer inhibitor, type and contained amount of a bromine-based flame retardant.

The thermal stabilizer is preferably a hindered amine compound, a phosphorous compound, or an epoxy compound in terms of allowing controlling a 1% weight-loss temperature to a desired value in thermogravimetric analysis of a bromine-based flame retardant-containing mixture. Thermal stabilizers of various types can be used alone or in combination of two or more thereof. Note that these thermal stabilizers can be used also as a light-resistant stabilizer, as described later.

(2-7. Radical generator)

Expandable thermoplastic resin particles in accordance with an embodiment of the present invention can exhibit high flame retardancy by further containing a radical generator (for example, by using a bromine-based flame retardant and a radical generator in combination).

The radical generator may be selected as appropriate in accordance with type of a thermoplastic resin used, type and contained amount of a blowing agent, type and contained amount of a radiative heat transfer inhibitor, and type and contained amount of a bromine-based flame retardant.

Examples of the radical generator encompass cumene hydroperoxide, dicumyl peroxide, t-butylhydroperoxide, 2,3-dimethyl-2,3-diphenylbutane, and poly-1,4-isopropyl benzene. Radical generators of various types can be used alone or in combination of two or more thereof.

(2-8. Other additives)

Expandable thermoplastic resin particles in accordance with an embodiment of the present invention may contain, as necessary, one or more other additives selected from the group consisting of radiative heat transfer inhibitors, processing aids, light-resistant stabilizers, nucleating agents, expansion/foaming aids, antistatic agents, and colorants such as pigments, provided that the effects of an embodiment of the present invention are not impaired.

Examples of the processing aids encompass sodium stearate, magnesium stearate, calcium stearate, zinc stearate, barium stearate, and liquid paraffin.

Examples of the light-resistant stabilizers encompass not only hindered amines, phosphoric stabilizers, and epoxy compounds which have been described above, but also phenolic antioxidants, nitrogen-based stabilizers, sulfuric stabilizers, and benzotriazoles.

Examples of the nucleating agents encompass:

inorganic compounds such as silica, silicate calcium, wollastonite, kaolin, clay, mica, zinc oxide, calcium carbonate, sodium hydrogen carbonate, and talc; high-molecular compounds such as methyl methacrylate-based copolymers and ethylene-vinyl acetate copolymer resins; olefin-based waxes such as polyethylene waxes; fatty acid bisamides such as methylenebisstearylamide, ethylenebisstearylamide, hexamethylenebis palmitic acid amide, and ethylenebis oleic amide.

As the foregoing expansion/foaming aid, a solvent having a boiling point of not higher than 200°C under atmospheric pressure can be desirably used. Examples of the expansion/foaming aids encompass aromatic hydrocarbons such as styrene, toluene, ethylbenzene, and xylene; alicyclic hydrocarbons such as cyclohexane and methylcyclohexane; and acetic esters such as ethyl acetate and butyl acetate.

Note that, with regard to the radiative heat transfer inhibitors, the antistatic agents, and the colorants, those which are for use in resin compositions can be used without any particular limitation. Various types of such other additives can be used alone or in combination of two or more thereof.

[3. Method of producing expandable thermoplastic resin particles]

Expandable thermoplastic resin particles in accordance with an embodiment of the present invention are preferably produced by a melting and kneading method in which graphite, a thermoplastic resin, and one or more other components are melted and kneaded with use of an extruder, and then the resultant mixture is cut into particles. Examples of the melting and kneading method include the following two methods: a first melting and kneading method; and a second melting and kneading method.

An example of the first melting and kneading method is as follows: a thermoplastic resin and graphite, and, as necessary, one or more additives such as a flame retardant, a radical generator, and/or a thermal stabilizer are melted and kneaded with use of an extruder; a blowing agent is dissolved and dispersed in the melted and kneaded product with use of the extruder or mixing equipment provided downstream of the extruder; the melted and kneaded product is extruded through a die, attached downstream of the extruder and having many small holes, into a cutter chamber filled with pressurized circulating water; and immediately after the melted and kneaded product is extruded, the melted and kneaded product is cut with use of a rotary cutter while being cooled by the pressurized circulating water to solidify. Note here that the melting and kneading by the extruder can be carried out (i) with use of a single extruder, (ii) with use of a plurality of extruders which are connected with each other, or (iii) with combined use of an extruder and a second kneading device such as a static mixer or a stirrer including no screw, and these cases can be selected as appropriate.

An example of the second melting and kneading method is as follows: a thermoplastic resin and graphite, and, as necessary, one or more additives such as a flame retardant, a radical generator, and/or a thermal stabilizer are melted and kneaded with use of an extruder; the melted and kneaded product is extruded through a die having many small holes; then the resultant product is cut with a cutter (by a cold cutting method or a hot cutting method) to obtain thermoplastic resin particles; and then the resin particles are suspended in water and a blowing agent is caused to be contained in the resin particles.

In an embodiment of the present invention, the amount of graphite aggregates can be reduced by, for example, improving kneading performance through selection of screws of a stirrer and an extruder, and/or improving the affinity between the thermoplastic resin and graphite. A specific example of a means to improve the affinity between the thermoplastic resin and graphite may be surface treatment of graphite, and/or addition of an appropriate dispersant.

That is, in an embodiment of the present invention, with use of the foregoing means to reduce the amount of graphite aggregates, it is possible to achieve a desired span of graphite in the resulting expandable thermoplastic resin particles and possible to enjoy the effects provided by an embodiment of the present invention, even in a case where graphite is not made into the form of a masterbatch (described later).

In particular, in an embodiment of the present invention, it is preferable that: a mixture containing a thermoplastic resin and graphite is kneaded with use of a kneading device including a twin-screw stirrer and thereby graphite is made into the form of a masterbatch; and then the masterbatch is used as graphite in the production of expandable thermoplastic resin particles.

The mixture for preparation of a graphite masterbatch may contain one or more additives in addition to the thermoplastic resin and graphite. Examples of the additives include mold release, plasticizers, dispersants, and lubricants. In particular, ethylene-bis-stearamide may be added because, for example, such an additive allows the mixture to be easily released from the kneading device including a twin-screw stirrer.

The kneading device including a twin-screw stirrer can be a known kneading device, and may be, for example, an intensive mixer, an internal mixer, or a Banbury mixer. Among these, an internal mixer or a Banbury mixer is preferred, because a load is generated and good mixing is achieved.

In kneading the mixture containing the thermoplastic resin and graphite with use of the kneading device including a twin-screw stirrer, the degree of dispersion of graphite in the masterbatch can be improved by appropriately adjusting, e.g., the contained amount of graphite, load, kneading duration, resin temperature, clearance between a blade and casing of the two-screw stirrer, and/or the shape of the blade. That is, by adjusting the conditions to suit for each two-screw stirrer, it is possible to control the span of graphite in the masterbatch to a specific value or less. As a result, the desired span of graphite is maintained even after the masterbatch is made into expandable thermoplastic resin particles, and the generation of graphite aggregates is reduced. This makes it possible to increase the radiative heat transfer reducing ability of graphite, and, when the graphite is used in a foamed molded product, low thermal conductivity is achieved. In addition, since the generation of aggregates is reduced, cell membranes increase in strength and become less prone to buckling, and the shrinkage of pre-expanded particles immediately after pre-expansion is reduced. It is further inferred that, in kneading, (i) graphite particles (including aggregates) are dispersed and (ii) the number of graphite particles increases because the graphite is separated and detached into fine particles in a mixed manner.

For expandable thermoplastic resin particles in accordance with an embodiment of the present invention, in a case where the masterbatch is kneaded with some other thermoplastic resin (another thermoplastic resin), the thermoplastic resin contained in the masterbatch and the another thermoplastic resin may be the same or different. From the viewpoints of dispersibility of graphite and foamability/expandability and moldability, it is preferable that the thermoplastic resin contained in the masterbatch and the another thermoplastic resin are well compatible with each other.

The temperature set in a melting and kneading section of the extruder in the first and second melting and kneading methods is preferably 100°C to 250°C. The duration of time during which the resin and the one or more components stay inside the extruder (i.e., duration from supply of the resin and the one or more components into the extruder to completion of the melting and kneading) is preferably not more than 10 minutes.

In a case where the temperature set in the melting and kneading section of the extruder is not higher than 250°C and/or in a case where the duration of stay inside the extruder through to the end of the melting and kneading is not more than 10 minutes, decomposition of the bromine-based flame retardant does not easily occur, so that a desired flame retardancy can be achieved. This yields an effect that it is not necessary to add a large amount of a flame retardant in order to impart a desired flame retardancy.

On the other hand, in a case where the temperature set in the melting and kneading section of the extruder is not lower than 100°C, load on the extruder is reduced, so that stable extrusion is realized.

Note here that in a case where an extruder(s) including a single screw or a twin screw is/are used, "the melting and kneading section of the extruder" means a portion extending from a feed section to a tip of a final extruder in the downstream. In a case where a first extruder and a second kneading device such as a static mixer and a stirrer including no screw are used together, "the melting and kneading section of the extruder" means a portion extending from a feed section of the first extruder to a tip of the second kneading device.

The extruder for use in the first and second melting and kneading methods can be a known extruder, and may be a single-screw extruder, a twin-screw extruder, or a tandem extruder which is a combination of one or more single-screw extruders and/or one or more twin-screw extruders. It is preferable that, in the step of melting and kneading the mixture containing graphite and a thermoplastic resin with an extruder, the extruder is a twin-screw extruder from the viewpoint of dispersion of graphite. With a single-screw extruder, graphite may be poorly dispersed; however, the graphite may be dispersed thoroughly by improving the kneading performance by, for example, placing a static mixer downstream of the single-screw extruder.

The die used in the first and second melting and kneading methods is not particularly limited, but can be, for example, one which has small holes each having a diameter of preferably 0.3 mm to 2.0 mm, more preferably 0.4 mm to 1.0 mm.

In the first melting and kneading method, a blowing agent, graphite, and, as necessary, one or more additives such as a bromine-based flame retardant, a thermal stabilizer, and/or a nucleating agent are dissolved or uniformly dispersed in a thermoplastic resin within an extruder. Then, the molten resin (melted and kneaded product) is cooled to an appropriate temperature as necessary, and is extruded into pressurized cooling water through a die having a plurality of small holes.

In the first melting and kneading method, the temperature of the molten resin immediately before being extruded through the die is preferably not lower than $Tg+40°C$, more preferably $Tg+40°C$ to $Tg+100°C$, and even more preferably $Tg+50°C$ to $Tg+70°C$, where $Tg$ is a glass transition temperature of the thermoplastic resin in a state where the resin contains no blowing agent.

In a case where the temperature of the molten resin immediately before being extruded from the die is not lower than $Tg+40°C$, the molten resin extruded has low viscosity, so that the small holes are clogged less frequently, and deformation of obtained resin particles due to a decrease in actual open hole rate of the small holes is less likely to occur. On the other hand, in a case where the temperature of the molten resin immediately before being extruded from the die is not higher than $Tg+100°C$, the molten resin extruded more easily solidifies, and thus undesirable expansion of the molten resin is suppressed. Furthermore, the viscosity of the molten resin extruded is not too low, so that the molten resin can be cut by the rotary cutter more stably and not easily tangled around the rotating cutter.

A cutting device which cuts the molten resin extruded into the circulating pressurized cooling water in the first melting and kneading method is not particularly limited, but can be, for example, a device by which: (i) the molten resin is cut by a rotary cutter, which is in contact with a lip of the die, into particles, (ii) the particles are transferred, without being expanded, in the pressurized circulating cooling water to the centrifugal dehydrator, and (iii) the particles are dewatered and collected.

Expandable thermoplastic resin particles in accordance with an embodiment of the present invention can alternatively be produced by seed polymerization, which is used in general production of expandable thermoplastic resin particles. A specific example of the seed polymerization is as follows: a thermoplastic resin and graphite are melted and kneaded with an extruder; the resultant product is extruded through a die having small holes and is cut by a cutter to obtain graphite-containing resin seed particles; then the graphite-containing resin seed particles are suspended in water; resin monomer, an initiator, and, as necessary, one or more other additives such as a bromine-based flame retardant, and/or a nucleating agent are supplied to the suspension and seed polymerization is performed; and impregnation with a blowing agent is carried out before, during, and/or after the polymerization. The conditions under which the step of obtaining the graphite-containing resin seed particles is carried out may be the same as, for example, those for the foregoing second melting and kneading method. The conditions under which seed polymerization is carried out and conditions under which the impregnation with a blowing agent is carried out may be selected as appropriate according to, for example, constituents used.

A method of producing expandable thermoplastic resin particles in accordance with an embodiment of the present invention is not particularly limited, and may be, for example, any of the following methods.

(i) A method of producing expandable thermoplastic resin particles, including a kneading step involving melting and kneading a thermoplastic resin, graphite, and a blowing agent, in which the contained amount of the graphite is not less than 2.0 wt% and not more than 10.0 wt% with respect to 100 wt% of the expandable thermoplastic resin particles, in which the graphite in the expandable thermoplastic resin particles has a mean particle size of not less than 0.5 μm and less than 2.5 μm, in which span "S", which indicates the spread of particle size distribution of the graphite in the expandable thermoplastic resin particles and which is represented by the following equation (1), is not more than 4.0, and in which a value obtained by dividing D90 of the graphite in the expandable thermoplastic resin particles by D90 of the graphite before melted and kneaded in the kneading step is not more than 2.0:

$$S = (D90-D10)/D50 \ \ldots \ Equation \ (1),$$

where D90 represents 90% volume cumulative particle size, D10 represents 10% volume cumulative particle size, and D50 represents 50% volume cumulative particle size (mean particle size).

(ii) A method of producing expandable thermoplastic resin particles, including: a first kneading step involving melting and kneading a thermoplastic resin and graphite to obtain a melted and kneaded product; and a second kneading step involving melting and kneading the melted and kneaded product, another thermoplastic resin, and a blowing agent, in which the contained amount of the graphite is not less than 2.0 wt% and not more than 10.0 wt% with respect to 100 wt% of the expandable thermoplastic resin particles, in which the graphite in the expandable thermoplastic resin particles has a mean particle size of not less than 0.5 $\mu$m and less than 2.5 $\mu$m, in which span "S", which indicates the spread of particle size distribution of the graphite in the expandable thermoplastic resin particles and which is represented by the following equation (1), is not more than 4.0, and in which a value obtained by dividing D90 of the graphite in the expandable thermoplastic resin particles by D90 of the graphite before melted and kneaded in the first kneading step is not more than 2.0:

$$S = (D90-D10)/D50 \ ... \ Equation \ (1),$$

where D90 represents 90% volume cumulative particle size, D10 represents 10% volume cumulative particle size, and D50 represents 50% volume cumulative particle size (mean particle size).

Each of the above-described production methods makes it possible to reduce the generation of aggregates when melting and kneading are carried out. It is therefore possible to obtain expandable thermoplastic resin particles that achieve both high heat insulating property and high expandability.

In the kneading step of the foregoing method (i) or in the second kneading step of the foregoing method (ii), an extruder including a two-screw stirrer may be used, and a flame retardant and one or more other additives may be mixed as necessary. According to the foregoing method (i), the expandable thermoplastic resin particles can be obtained by: cooling the kneaded product obtained in the kneading step to a predetermined temperature as necessary; and then, for example, extruding the product through a die having small holes into a cutter chamber filled with pressurized circulating water and immediately cutting the extruded product with a rotary cutter. According to the foregoing method (ii), the expandable thermoplastic resin particles can be obtained by: cooling the kneaded product obtained in the second kneading step to a predetermined temperature as necessary; and then, for example, extruding the product through a die having small holes into a cutter chamber filled with pressurized circulating water and immediately cutting the extruded product with a rotary cutter.

In the foregoing methods (i) and (ii), the set temperature of the extruder is preferably 100°C to 250°C. According to this arrangement, the extruder experiences lesser load, making the extrusion stable.

In the foregoing methods (i) and (ii), the duration of time from when the constituents are supplied to the extruder to when mixing ends, i.e., the duration of time during which the constituents stay in the extruder, is preferably not more than 10 minutes. This arrangement makes the flame retardant less likely to decompose and eliminates the need for addition of a large amount of flame retardant.

The melted and kneaded product obtained in the first kneading step in the foregoing method (ii) can be a masterbatch. In other words, the first kneading step is a step of obtaining a masterbatch.

The second kneading step of the foregoing method (ii) may be a step of melting and kneading the masterbatch obtained in the first kneading step and another thermoplastic resin. The term "another thermoplastic resin" used in the second kneading step is intended to mean a thermoplastic resin that is further added to the masterbatch. The phrase "another resin" is used to distinguish between the resin already contained in the masterbatch and a resin that is further added to the masterbatch. The thermoplastic resin already contained in the masterbatch and a thermoplastic resin that is further added to the masterbatch may be the same thermoplastic resin or different thermoplastic resins.

[4. Pre-expanded particles and foamed molded product]

Pre-expanded particles in accordance with an embodiment of the present invention are preferably thermoplastic resin pre-expanded particles obtained through pre-expansion of the foregoing expandable thermoplastic resin particles.

Pre-expanded particles in accordance with an embodiment of the present invention have the above-described arrangement, and therefore shrink to a lesser extent immediately after pre-expansion. The pre-expanded particles in accordance with an embodiment of the present invention can therefore have high expansion ratio, and are capable to giving a foamed molded product having high expansion ratio, i.e., a lightweight foamed molded product. Furthermore, since the pre-expanded particles in accordance with an embodiment of the present invention have the above-described arrangement, a foamed molded product obtained by molding the pre-expanded particles can exhibit low thermal conductivity. That is, the pre-expanded particles in accordance with an embodiment of the present invention are capable of providing a foamed molded product that has low thermal conductivity, i.e., high heat insulating property.

Expandable thermoplastic resin particles in accordance with an embodiment of the present invention are expanded by a known pre-expansion step, (e.g., a step in which expandable thermoplastic resin particles are expanded by heated steam at an expansion ratio of 10 to 110 times) to obtain pre-expanded resin particles, the pre-expanded resin particles are aged, as necessary, for a predetermined period, and then are used for molding. The pre-expanded resin particles obtained are molded (e.g., in-mold molding) by steam with use of a conventionally known molding apparatus to prepare a foamed molded product. Depending on the shape of a mold used, it is possible to obtain an in-mold molded product having a complex shape and a molded product having a shape of a block.

Expandable thermoplastic resin particles in accordance with an embodiment of the present invention are such that a thermoplastic resin foamed molded product, obtained by molding the expandable thermoplastic resin particles, has a thermal conductivity of preferably not more than 0.0310 W/mK. The thermal conductivity is measured as follows: the expandable thermoplastic resin particles are molded to obtain a thermoplastic resin foamed molded product having an expansion ratio of 50 times; the thermoplastic resin foamed molded product is allowed to stand at a temperature of 50°C for 30 days and further allowed to stand at a temperature of 23°C for 24 hours; and then the thermal conductivity of the thermoplastic resin foamed molded product is measured at a central temperature of 23°C in accordance with JIS A9511:2006R. This arrangement makes it possible to obtain a thermoplastic resin foamed molded product that maintains very low thermal conductivity and accordingly high heat insulating property for a long period of time.

A foamed molded product obtained from expandable thermoplastic resin particles in accordance with an embodiment of the present invention can have very low thermal conductivity even if the foamed molded product has a high expansion ratio of 80 times ($cm^3$/g). Specifically, it is preferable that the foamed molded product exhibits a very low thermal conductivity A (described later) of not more than 0.0310 W/mK in a case where the foamed molded product has an expansion ratio of 80 times. Further, it is preferable that the resin foamed molded product has a very low thermal conductivity B (described later) of not more than 0.0324 W/mK even after being stored for 30 days at a temperature of 50°C, at which a blowing agent easily volatilizes, in a case where the foamed molded product has an expansion ratio of 80 times. In this case, it is possible to maintain very low thermal conductivity, and accordingly excellent heat insulating property, for a long period of time. Note that, at an expansion ratio of 50 times, the thermal conductivity A is preferably not more than 0.0284 W/mK and the thermal conductivity B is preferably not more than 0.0310 W/mK.

Furthermore, as the expansion ratio of a foamed molded product increases, the amount of expandable thermoplastic resin particles used as a raw material decreases. As such, according to an embodiment of the present invention, a foamed molded product with a high expansion ratio can be produced at low cost.

A foamed molded product in accordance with an embodiment of the present invention can be controlled to have low thermal conductivity as well as self-extinguishing property and have an oxygen index of not less than 26. In this case, the foamed molded product can be particularly suitably used as a heat insulating material for building.

A thermoplastic resin foamed molded product in accordance with an embodiment of the present invention has an expansion ratio of preferably not less than 50 times ($cm^3$/g). The foamed molded product more preferably has an expansion ratio of not less than 70 times ($cm^3$/g), even more preferably not less than 80 times ($cm^3$/g). According to this arrangement, a foamed molded product can achieve low thermal conductivity even in a case where the foamed molded product has an expansion ratio of not less than 80 times. Therefore, the thermoplastic resin foamed molded product in accordance with an embodiment of the present invention (i) can be produced at low cost, (ii) is lightweight, and (iii) has a high level of heat insulating property even when having a high expansion ratio.

Note that an expansion ratio is herein expressed using the unit "times" or the unit "$cm^3$/g", which are synonymous with each other.

Pre-expanded particles obtained through pre-expansion of expandable thermoplastic resin particles in accordance with an embodiment of the present invention, immediately after the pre-expansion, shrink to a lesser extent. The rate of shrinkage of the pre-expanded particles is calculated using the following equation, from a bulk expansion ratio of the pre-expanded particles immediately after pre-expansion and a bulk expansion ratio after aging of the pre-expanded particles. The rate of shrinkage is preferably 0% to not more than 10%, more preferably 0% to not more than 8%, even more preferably 0% to not more than 6%. A low rate of shrinkage of the pre-expanded particles is advantageous in that, e.g., it is effective in achieving even higher expansion ratio, that high expansion ratio can be obtained stably, and that the management of the pre-expanded particles in an aging silo is easy.

The foamed molded product has an average cell diameter of preferably 70 $\mu$m to 250 $\mu$m, more preferably 90 $\mu$m to 200 $\mu$m, even more preferably 100 $\mu$m to 180 $\mu$m. In a case where the average cell diameter is in the range as described above, the foamed molded product has high heat insulating property. A foamed molded product having an average cell diameter of not less than 70 $\mu$m has an increased closed cell ratio, and a foamed molded product having an average cell diameter of not more than 250 $\mu$m has a decreased thermal conductivity. The average cell diameter is adjustable, for example, by selecting the amount of a nucleating agent as appropriate.

A thermoplastic resin foamed molded product in accordance with an embodiment of the present invention is preferably a thermoplastic resin foamed molded product obtained by molding pre-expanded particles obtained through pre-expansion of the expandable thermoplastic resin particles.

The thermoplastic resin foamed molded product in accordance with an embodiment of the present invention, which has the above-described arrangement, can thereby have high expansion ratio, thus can be lightweight. Furthermore, the thermoplastic resin foamed molded product in accordance with an embodiment of the present invention has the above-described arrangement and therefore has low thermal conductivity, i.e., high heat insulating property.

[5. Method of producing thermoplastic resin foamed molded product]

The following description will discuss, in detail, an arrangement and feature of a method of producing a thermoplastic resin foamed molded product in accordance with an embodiment of the present invention.

A method of producing a thermoplastic resin foamed molded product in accordance with an embodiment of the present invention preferably includes a step of molding pre-expanded thermoplastic resin particles obtained by pre-expanding expandable thermoplastic resin particles in accordance with any of the embodiments described earlier.

A method of producing a thermoplastic resin foamed molded product in accordance with an embodiment of the present invention preferably includes a step of molding pre-expanded resin particles obtained by pre-expanding expandable resin particles prepared by the method of producing expandable thermoplastic resin particles in accordance with any of the embodiments described above.

A method of producing a thermoplastic resin foamed molded product in accordance with an embodiment of the present invention preferably includes a step of molding pre-expanded particles in accordance with an embodiment described above.

A method of producing a thermoplastic resin foamed molded product in accordance with an embodiment of the present invention may be used for preparing a thermoplastic resin foamed molded product in accordance with an embodiment described above.

A thermoplastic resin foamed molded product obtained by a method of producing a thermoplastic resin foamed molded product in accordance with an embodiment of the present invention preferably has the arrangements and physical properties described in "4. Pre-expanded particles and foamed molded product", and more preferably has the arrangements and physical properties of a thermoplastic resin foamed molded product in accordance with an embodiment of the present invention.

A method of producing a thermoplastic resin foamed molded product in accordance with an embodiment of the present invention preferably includes a predetermined pre-expanding step and a predetermined molding step. It is preferable that (i) the method includes a pre-expanding step involving introducing steam to expandable thermoplastic resin particles, which have been put in a can of a pre-expanding apparatus, so as to obtain pre-expanded particles and a molding step involving subjecting the pre-expanded particles to in-mold molding and (ii) the duration of the introduction of steam in the pre-expanding step is 50 seconds to 500 seconds.

A method of producing a thermoplastic resin foamed molded product in accordance with an embodiment of the present invention preferably includes a predetermined molding step. Specifically, the present production method preferably includes a molding step involving molding pre-expanded particles within a mold.

(5-1. Pre-expanding step)

The pre-expanding step can be conducted, with use of a pre-expanding apparatus, in the same manner as conventional pre-expansion of expandable thermoplastic resin particles.

(5-2. Molding step)

In the molding step, a thermoplastic resin foamed molded product can be obtained in the same manner as a conventional foaming molding method, except that the pre-expanded particles are used. The pre-expanded particles in the molding step may be the pre-expanded particles obtained in the foregoing pre-expanding step or may be pre-expanded particles in accordance with an embodiment of the present invention.

Further, in an embodiment of the present invention, it is preferable that a closed cell ratio of pre-expanded particles and a closed cell ratio of a thermoplastic resin foamed molded product are each adjusted to 95% to 100%. In a case where pre-expanded particles have a closed cell ratio of not less than 95%, higher expansion ratio tends to be easily achieved and a thermoplastic resin foamed molded product obtained with use of the pre-expanded particles tends to have enhanced surface appearance. In a case where a thermoplastic resin foamed molded product has a closed cell ratio of not less than 95%, the thermoplastic resin foamed molded product tends to have a reduced thermal conductivity. The closed cell ratio is adjustable, for example, by introducing a mixture of steam and air into a can or a mold and selecting the ratio of the steam in the mixture as appropriate.

As a technique for obtaining pre-expanded particles having high expansion ratio, a two-step expansion method is known. The two-step expansion method is a method in which (i) expandable thermoplastic resin particles are subjected to a first-step pre-expansion so as to obtain pre-expanded particles having an expansion ratio increased to a certain extent, (ii) the pre-expanded particles are aged and thereby air is introduced in the pre-expanded particles, and (iii) then the pre-expanded particles are subjected to a second-step pre-expansion so as to obtain pre-expanded particles having a further increased expansion ratio. Examples of the two-step expansion method encompass: a method in which, after completion of the first-step pre-expansion, the pre-expanded particles obtained are aged in a can of a pre-expanding apparatus; and a method in which the pre-expanded particles obtained are taken out of the pre-expanding apparatus, aged, and then introduced back into the pre-expanding apparatus. This arrangement makes it possible to provide a thermoplastic resin foamed molded product having low thermal conductivity.

[6. Applications]

A foamed molded product produced from expandable thermoplastic resin particles in accordance with an embodiment of the present invention can have low thermal conductivity even after a long period of time. Therefore, the foamed molded product can be used in applications such as (i) heat insulating materials for buildings for use in, e.g., floors, walls, and roofs, and heat insulating materials for automotive use, (ii) boxes for agricultural or fishery products such as boxes for transporting fishery products including fish and boxes for transporting agricultural products including vegetables, (iii) heat insulating materials for bathrooms, and heat insulating materials for, e.g., hot-water tanks.

Examples

The following description will discuss an embodiment of the present invention in detail on the basis of Examples and Comparative Examples. The present invention is, however, not limited by the Examples and the Comparative Examples.

In the following Examples and the Comparative Examples, a styrene-based resin was used as an example of a thermoplastic resin. The styrene-based resin used will be described later in detail.

Note that the following measurement methods and evaluation methods were employed in the Examples and the Comparative Examples below.

[Measurement of thermal conductivity A of foamed molded product]

It is generally known that the value of thermal conductivity increases as the average temperature of measurement at which the thermal conductivity is measured increases. In order to compare heat insulating properties, it is necessary to set the average temperature of measurement. Herein, a temperature of 23°C, which is defined under JIS A9511:2006R (a standard for expanded plastic heat retaining materials), is used as an average temperature of measurement.

In the Examples and Comparative Examples below, a thermal conductivity A was measured in the following manner. A sample for thermal conductivity measurement was cut from a foamed molded product, and was allowed to stand at a temperature of 50°C for 48 hours and further allowed to stand at a temperature of 23°C for 24 hours. Then, the thermal conductivity A was measured.

More specifically, a sample having a size of length 300 mm × width 300 mm × thickness 25 mm was cut from a foamed molded product. As for a thickness direction, the thickness of the foamed molded product was 25 mm (the thickness of the sample was the same as that of the foamed molded product). Accordingly, two surfaces of the sample, each having a size of length 300 mm × width 300 mm, are original surfaces as obtained when the foamed molded product had been molded. Such an original surface as obtained at a time of molding is generally called "surface skin" and is herein defined as "surface layer." The sample was allowed to stand at a temperature of 50°C for 48 hours and further allowed to stand at a temperature of 23°C for 24 hours. Next, the thermal conductivity A was measured by the heat flow meter method in accordance with JIS A1412-2:1999 with use of a thermal conductivity measuring device (produced by EKO Instrument; HC-074), at an average temperature of 23°C and with a temperature difference of 20°C.

[Measurement of thermal conductivity B of foamed molded product after annealing]

In order to evaluate a thermal conductivity B in a case in which a blowing agent is replaced by air after an elapse of a long period of time, a sample for thermal conductivity measurement was cut from a foamed molded product, was allowed to stand at a temperature of 50°C for 30 days and further allowed to stand at a temperature of 23°C for 24 hours, and then the thermal conductivity B was measured.

As a result of drying (annealing) performed for 30 days at 50°C, the amount of a hydrocarbon-based blowing agent, such as butane or pentane, contained in the foamed molded product becomes not more than 0.5%, and thus has little influence on thermal conductivity. Accordingly, evaluation of the thermal conductivity B in a case in which the foamed molded product has been used at room temperature for a long period of time can be made substantially accurately.

More specifically, a sample having a size of length 300 mm × width 300 mm × thickness 25 mm was cut from a foamed molded product in the same manner as the measurement of the thermal conductivity A. The sample was allowed to stand at a temperature of 50°C for 30 days and further allowed to stand at a temperature of 23°C for 24 hours. Subsequently, the thermal conductivity B was measured by the heat flow meter method in accordance with JIS A1412-2:1999 with use of a thermal conductivity measuring device (produced by EKO Instrument; HC-074), at an average temperature of 23°C and with a temperature difference of 20°C.

[Measurement of graphite content (contained amount of graphite)]

Approximately 10 mg of expandable thermoplastic resin particles (expandable styrene-based resin particles), obtained in each of the Examples and the Comparative Examples, were collected to use as samples. Each sample was subjected to the following treatments I through III in succession, with use of a thermogravimetry device (produced by SII NanoTechnology Inc.; TG/DTA 220U) equipped with a thermal analysis system: EXSTAR 6000. The amount of weight loss in III was used as the weight of graphite, and expressed in percentage with respect to the weight of the sample.

I. In a nitrogen stream of 200 mL/min, the temperature of the sample is raised from 40°C to 600°C at a rate of 20°C/min, and then the temperature is maintained at 600°C for 10 minutes.
II. In a nitrogen stream of 200 mL/min, the temperature of the sample is lowered from 600°C to 400°C at a rate of 10°C/min, and then the temperature is maintained at 400°C for 5 minutes.
III. In an air stream of 200 mL/min, the temperature of the sample is raised from 400°C to 800°C at a rate of 20°C/min, and then the temperature is maintained at 800°C for 15 minutes.

[Measurement of volume cumulative particle sizes (D50, D10, D90 (pm)) of graphite and laser scattering intensity (%)]

(1) Conditions under which sample solution is prepared

(a) In a case where expandable styrene-based resin particles are to be subjected to the measurement,
500 mg of expandable styrene-based resin particles are dissolved and dispersed in 20 mL of 0.1% (w/w) Span 80 toluene solution.
(b) In a case where graphite before kneading (i.e., graphite itself as a raw material) is to be subjected to the measurement,
20 mg of the graphite and 480 mg of a styrene-based resin (A) are dissolved and dispersed in 20 mL of 0.1% (w/w) Span 80 toluene solution.

In (a) and (b), the 0.1% (w/w) Span 80 toluene solution is a solvent for dissolution and dispersion of the sample subjected to the measurement, and is also referred to as a dispersion medium. In (a) and (b), "dispersion" means a state in which a resin is dissolved and graphite is dispersed. The 0.1% (w/w) Span 80 toluene solution refers to the one that is obtained by adding, to toluene, 0.1% (w/w) of Span 80 (produced by Tokyo Chemical Industry Co., Ltd.), which is a surfactant.

Next, the sample solution above is subjected to ultrasonic irradiation with use of an ultrasonic cleaner to thereby reduce aggregation of graphite.

(2) Conditions of ultrasonic irradiation

Device used: ultrasonic cleaner produced by AS ONE Corporation; model number: USM
Oscillation frequency: 42 kHz
Duration of irradiation: 10 minutes
Temperature: room temperature

(3) Conditions of measurement of particle size

Measuring device: laser diffraction particle size analyzer Mastersizer 3000, produced by Malvern
Light source: 632.8 nm red He-Ne laser and 470 nm blue LED
Dispersant unit: wet dispersion unit Hydro MV

In accordance with the following settings, analysis was conducted in which measurement and analysis were performed by laser diffractometry based on Mie theory in accordance with ISO13320:2009, JIS Z8825:2013 so as to obtain a volume distribution. Then, the mean particle size (50% volume cumulative particle size) D50, 10% volume cumulative particle size D10, and 90% volume cumulative particle size D90 of graphite in the sample were calculated.

Particle type: nonspherical
Refractive index of graphite: 2.42
Absorptance of graphite: 1.0
Dispersion medium: 0.1% (w/w) Span 80 toluene solution
Refractive index of dispersion medium: 1.49
Stirrer speed in dispersion unit: 2500 rpm
Analysis model: General, Single mode is maintained
Temperature of measurement: room temperature

(4) Procedure of measurement

120 mL of 0.1% (w/w) Span 80 toluene solution was introduced into a dispersion unit, was stirred at 2500 rpm, and was stabilized. In a state where a measurement cell contained no sample solution and contained only a dispersion medium, irradiation with a 632.8 nm red He-Ne laser beam was performed. At this time, the intensity of light was measured by a central detector as an intensity Lb of light transmitted through the dispersion medium (solvent). Next, 2 mL of a sample solution, which had been subjected to an ultrasonic treatment, was collected and added to the dispersion unit. One minute after the addition of the sample solution, irradiation with a 632.8 nm red He-Ne laser beam was performed. At this time, the intensity of light was measured by the central detector as an intensity Ls of light transmitted through the sample solution. From Ls and Lb thus obtained, a laser scattering intensity Ob of the sample solution was calculated in accordance with the following equation.

$$Ob\ (\%) = (1-Ls/Lb) \times 100 \ \ldots \ Equation\ (2)$$

The central detector is a detection section which is located in front of an output of the laser beam entering the sample solution so as to face the output. Light detected by the central detector represents transmitted light that was not scattered. A laser scattering intensity represents the amount of a laser beam that is lost when the laser of an analysis device is scattered within a sample.

When measuring the Ls and Lb, also the D50, D10, and D90 were measured, and the span "S" indicative of the spread of the particle size distribution of graphite was calculated from the D50, D10, and D90 using the following equation (1).

$$S = (D90-D10)/D50 \ \ldots \ Equation\ (1)$$

Larger values of span indicate wider particle size distributions of graphite. In particular, in a case where graphite having a mean particle size of less than 2.5 $\mu$m is used, a large value of span indicates that it is highly likely that coarse aggregates, which were not present in graphite before kneading (i.e., raw material graphite), have been generated.

(5) Calculation of laser scattering intensity per unit solution concentration of expandable styrene-based resin particles

In accordance with the following equation (3), a laser scattering intensity per unit solution concentration of the expandable styrene-based resin particles was calculated.

Laser scattering intensity per unit solution concentration of expandable styrene-based resin particles (%/(mg/ml)) = laser scattering intensity (Ob) (%) / {weight of sample (500 mg) / amount of toluene (20 mL) × amount of sample introduced (2 mL) / total amount of toluene in dispersion unit (120 mL + 2 mL)}        Equation (3)

The laser scattering intensity per unit solution concentration means a value obtained by dividing a measured laser scattering intensity by the concentration of a sample in toluene. Since this analyzer is a device that requires measurement to be carried out with use of a solution, the sample concentrations of the toluene solutions are controlled to be the same and thereby measured values on the same amounts of the samples are obtained.

(6) Calculation of laser scattering intensity per unit solution concentration of graphite in expandable styrene-based resin particles

In accordance with the following equation (4), a laser scattering intensity per unit solution concentration of graphite contained in the expandable styrene-based resin particles was calculated.

| | |
|---|---|
| Laser scattering intensity per unit solution concentration of graphite in expandable styrene-based resin particles {%/(mg/ml)}/wt% = laser scattering intensity per unit solution concentration of expandable styrene-based resin particles (%/(mg/ml)) / graphite content of expandable styrene-based resin particles (wt%) | Equation (4) |

It is an essence of an embodiment of the present invention that even with use of graphite having the same weight, an improvement in heat insulating property can be achieved by adjusting the state of the graphite contained in the expandable styrene-based resin particles, i.e., by adjusting the concentration at which the graphite is dispersed. The use of the above-described laser scattering intensity per unit solution concentration of graphite allows expressing an embodiment of the present invention.

(7) Calculation of laser scattering intensity per unit solution concentration of mixture of graphite before kneading and styrene-based resin

In accordance with the following equation (5), a laser scattering intensity per unit solution concentration of a mixture of graphite before kneading and a styrene-based resin was calculated.

| | |
|---|---|
| Laser scattering intensity per unit solution concentration of mixture of graphite before kneading and styrene-based resin {%/(mg/ml)} = laser scattering intensity (Ob) (%) / [{weight of graphite (20 mg) + styrene-based resin (480 mg)} / amount of toluene (20 mL) × amount of sample introduced (2 mL) / total amount of toluene in dispersion unit (120 mL + 2 mL)] | Equation (5) |

(8) Laser scattering intensity per unit solution concentration of graphite before kneading

In accordance with the following equation (6), a laser scattering intensity per unit solution concentration of graphite before kneading (i.e., graphite as a raw material) was calculated.

| | |
|---|---|
| Laser scattering intensity per unit solution concentration of graphite before kneading {%/(mg/ml)}/wt% = laser scattering intensity per unit solution concentration of mixture of graphite before kneading and styrene-based resin (%/(mg/ml)) / graphite content in mixture of graphite before kneading and styrene-based resin (20/500×100 = 4 wt%) | Equation (6) |

[Measurement of bromine content]

After performing an oxygen flask combustion method, bromine content was found by performing quantitative analysis of bromine by ion chromatography (hereinafter, "IC").

(1) Oxygen flask combustion method

A sample (5 mg of a foamed molded product) was placed on the center of a sheet of filter paper including a fuse section, and the sheet of filter paper was folded in three in a longitudinal direction while the fuse section remained fixed. Then, the sheet of filter paper was folded in three in a lateral direction, and the sheet of filter paper containing the sample was put in a platinum basket attached to a stopper section (glass plug) of a 500 mL combustion flask. On the other hand, 25 ml of an absorbing liquid (ultra pure water into which a drop of hydrous hydrazine has been dropped) was put in an Erlenmeyer flask, which served as a combustion flask, and the Erlenmeyer flask was further filled with oxygen.
The fuse section of the sheet of filter paper was ignited, and the platinum basket in which the sheet of filter paper was fixed was inserted into the Erlenmeyer flask, and then the sample was combusted inside the Erlenmeyer flask. After completion of the combustion, the combustion flask was tilted and shaken for 2 minutes and then was left for 1 hour, so that bromine generated by the combustion was absorbed by the absorbing liquid.

(2) IC

The absorbing liquid obtained by the oxygen flask combustion method was subjected to IC to measure the amount of bromine ion.

Device used: ICS-2000, produced by Dionex
Column: IonPac AG18, AS18 (diameter 4 mm $\times$ 250 mm)
Eluent: KOH gradient (eluent generator was used)
Flow rate of eluent: 1.0 ml/min
Amount of sample introduced: 50 $\mu$l
Detector: electrical conductivity detector

The concentration of bromine in the sample was calculated in accordance with the following equation (7).

Concentration of bromine in sample (%) = [{result of IC measurement of styrene-based resin foamed molded product (mg/l) - result of background test (mg/l)} $\times$ 25 (ml) $\times$ 1000] / {amount of sample collected (mg) $\times$ 10000}        Equation (7)

[Method of measuring bulk expansion ratio and rate of shrinkage of pre-expanded particles]

A test sample in an amount of W (g) was taken from pre-expanded particles of each Example or Comparative Example, the test sample was allowed to fall freely into a graduated cylinder, and then the graduated cylinder was tapped so that the apparent volume V (cm$^3$) of the sample would be steady. The mass (g) and the volume (cm$^3$) of the sample were measured, and bulk expansion ratio was determined using the following equation (8).

Bulk expansion ratio (cm$^3$/g) = Volume (V) of test sample / Weight (W) of test sample        Equation (8)

A bulk expansion ratio of pre-expanded particles, measured within 5 minutes to 10 minutes from the end of discharge of the pre-expanded particles from a pre-expanding apparatus, is defined as a bulk expansion ratio immediately after pre-expansion (bulk expansion ratio after shrinkage after pre-expansion).
A bulk expansion ratio of pre-expanded particles, which is measured after aging at 30°C for 24 hours after shrinkage, is defined as a bulk expansion ratio after aging.
Furthermore, the rate of shrinkage of the pre-expanded particles was evaluated using the following equation (9).

Rate of shrinkage (%) = 100 - bulk expansion ratio immediately after pre-expansion / bulk expansion ratio after aging $\times$ 100        Equation (9)

[Measurement of expansion ratio and evaluation of expandability and moldability]

As with the case of measuring thermal conductivity, a sample having a size of length 300 mm $\times$ width 300 mm $\times$ thickness 25 mm was cut from the foamed molded product. The weight (g) of the sample was measured, and a longitudinal size, a lateral size, and a thickness size were measured with use of a vernier caliper. On the basis of the sizes thus measured, the volume (cm$^3$) of the sample was calculated, and expansion ratio was calculated in accordance with the following calculation equation (10).

Expansion ratio (cm$^3$/g) = sample volume (cm$^3$) / weight of sample (g)        Equation (10)

Note that as described earlier, the unit "times" for an expansion ratio of the foamed molded product is also usually expressed with use of the unit "cm$^3$/g".
Further, observation of a surface of the obtained foamed molded product having an expansion ratio of 80 times was conducted, and the following judgement was made: the foamed molded product was judged to have a good surface appearance if the foamed molded product had few gaps between particles; and the foamed molded product was judged to have a bad surface appearance if the foamed molded product had noticeable gaps between particles.
On the basis of the expansion ratio measured and the appearance of a surface of a molded product, expandability and moldability of styrene-based resin foamed molded product were evaluated. Evaluation of expandability and moldability is expressed as follows.

Good: Expandable thermoplastic resin particles were expandable at an expansion ratio of 80 times, and a molded product with a good appearance was obtained.

Average: Expandable thermoplastic resin particles were expandable at an expansion ratio of 80 times, but a molded product with a good appearance was not obtained.

Bad: Expandable thermoplastic resin particles were not expandable at an expansion ratio of 80 times.

[Evaluation of flame retardancy]

The foamed molded product prepared was allowed to stand at a temperature of 60°C for 48 hours and was further allowed to stand at a temperature of 23°C for 24 hours. Then, oxygen index was measured in accordance with JIS K7201.

[SEM observation of a cut surface of pressed foamed molded product]

In accordance with the present example, a foamed molded product was melted and compressed to obtain a pressed product in the form of a film (the pressed product thus obtained was used as a sample). With this, graphite particles were oriented parallel to the pressed face. Next, a sample was sliced from the prepared pressed product in the form of a film. By observing a cut surface of the slice sample, it is possible to observe the graphite from the side, and thus possible to know the state of dispersion of the graphite. The details thereof are discussed below.

(1) Preparation of pressed product

The foamed molded products (each having an expansion ratio of 50 times) produced in Example 1 and Comparative Example 1 were used as samples which would be formed into pressed products. The weight of each sample was 0.2 g. In order to obtain a pressed product having a uniform thickness, a stainless-steel spacer 50 $\mu$m in thickness was used. Each sample, together with the spacer, was sandwiched between two polyimide films each measuring 150 mm $\times$ 150 mm $\times$ 0.2 mm. This was placed on a pressing machine whose top plate had been sufficiently pre-heated at 200°C and whose bottom plate had been sufficiently pre-heated at 205°C, and was maintained for 2 minutes under the condition in which the gap between the top plate and the bottom plate of the pressing machine was 2 mm, thereby melting and defoaming the sample thoroughly. Next, the sample was pressed at a pressure of 50 kgf/cm$^2$ and maintained for 2 minutes, thereby obtaining a pressed product in the form of a film. Note, here, that a face of the pressed product facing the top plate is referred to as "front face", and a face of the pressed product facing the bottom plate is referred to as "back face". Next, the pressed product, sandwiched between the polyimide films, was pressed with another pressing machine at room temperature other than the foregoing pressing machine at 50 kgf/cm$^2$, and the pressed product was allowed to cool to room temperature. The room temperature here is about 10°C to 30°C, and the time taken for the pressed product to cool to room temperature is about 5 minutes. The cooled pressed product was removed from the polyimide films, and the process proceeded to the following (2).

(2) Preparation of sample for SEM observation

Samples for SEM observation were prepared in the following manner.

- A sample measuring 5 mm $\times$ 5 mm was sliced from the pressed product such that the center of the pressed product would be included in the sample.
- An epoxy resin as a protective agent was applied on the front and back faces of the slice sample.
- The slice sample was heated at 90°C for 30 minutes or longer and thereby the epoxy resin was allowed to cure.
- A cut surface of the slice sample was subjected to mirror polishing with abrasive paper (#2000) (this cut surface is hereinafter referred to as "polished cut surface").
- For finishing the polished cut surface, the polished cut surface was subjected to broad ion beam milling at an accelerating voltage of 6 kV with liquid nitrogen cooling with use of Ilion+ produced by Gatan or an equivalent thereof as an apparatus.
- Lastly, the polished cut surface was made electrically conductive by platinum deposition to obtain a sample for SEM observation.

(3) SEM observation

The polished cut surface was observed under a field emission scanning electron microscope (FE-SEM), and SEM images were obtained. The microscope used here was UltraPlus produced by Zeiss or a microscope having a resolution equivalent to UltraPlus. The observation was carried out under the condition in which the accelerating voltage was 5 kV, SE2 detector was used, and magnification was ×5000. The region of the polished cut surface seen in each SEM image was 23 μm × 16 μm. The region observed was, within the polished cut surface, a region extending from the thickness-wise center of the pressed product by 20 μm in each of the directions toward the front face and the back face, respectively, of the pressed product.

In accordance with the above-described method, SEM images of a cut surface of each of pressed products obtained by pressing the foamed molded products of Comparative Example 1 and Example 1 (described later) were obtained. The SEM images are shown in Figs. 1 and 2. These SEM images each show cross sections of graphite particles on the cut surface of the pressed product obtained by pressing the foamed molded product.

Raw materials used in the Examples and the Comparative examples are as follows.

(Styrene-based resin)

(A) Styrene homopolymer [680, produced by PS Japan Corporation]

(Graphite)

(B1) Graphite [BF-1AT, produced by Chuetsu Graphite Works Co., Ltd.]

Mean particle size D50: 1.7 μm
Laser scattering intensity per unit solution concentration of graphite: 9.1 {%/(mg/ml)}/wt%

(B2) Graphite [SGP-40B, produced by MARUTOYO Co., Ltd.]

Mean particle size D50: 5.8 μm
Laser scattering intensity per unit solution concentration of graphite: 4.0 {%/(mg/ml)}/wt%

(B3) Graphite [UP-5N, produced by Nippon Graphite Industry Co., Ltd.]

Mean particle size D50: 5.2 μm
Laser scattering intensity per unit solution concentration of graphite: 4.8 {%/(mg/ml)}/wt%

(Bromine-based flame retardant)

(C1) 2,2-bis[4-(2,3-dibromo-2-methylpropoxy)-3,5-dibromophenyl]propane [SR-130, produced by Dai-ichi Kogyo Seiyaku Co., Ltd.; bromine content = 66 wt%]

(Thermal stabilizer)

(D1) Tetrakis(2,2,6,6-tetramethylpiperidyloxycarbonyl)butane [LA-57, produced by ADEKA CORPORATION]
(D2) Bis(2,6-di-t-butyl-4-methylphenyl)pentaerythritol diphosphite [PEP-36, produced by ADEKA CORPORATION]

(Blowing agent)

(E1) Normal pentane [reagent produced by Wako Pure Chemical Industries, Ltd.,]
(E2) Isopentane [reagent produced by Wako Pure Chemical Industries, Ltd.]
(E3) Isobutane [Mitsui Chemicals, Inc.]

(Other additive)

(F) Ethylene-bis-stearamide [ALFLOW H-50S, produced by Nichiyu Corporation]

(Graphite masterbatch)

(I1) Into a Banbury mixer, 69 wt% of the styrene-based resin (A), 30 wt% of the graphite (B1), 1 wt% of the ethylene-bis-stearamide (F) were introduced as raw materials so as to achieve a total weight (A+B1+F) of 100 wt%, and were melted and kneaded for 40 minutes under a load of 7 kgf/cm$^2$ and without heating or cooling. At this time, the temperature of the resin was measured to be 170°C. The melted and kneaded product was supplied to an extruder, and was extruded through a die, attached to a tip of the extruder and having small holes, into a form of strands of resin. The strands of resin (melted and kneaded product) were allowed to cool to solidify in a water tank, and then were cut to obtain a masterbatch (I1).

(I2) The same process as described in (I1) was carried out, except that the amount of the styrene-based resin (A) was 49 wt%, the type and amount of the graphite (B1) were changed to (B2) and 50 wt%, the load applied in the Banbury mixer was 5 kgf/cm$^2$, the duration of kneading was 20 minutes, and the resin temperature was 180°C. In this way, a graphite mater batch (I2) was obtained.

(Masterbatch as mixture of bromine-based flame retardant and thermal stabilizer)

(J1) The styrene-based resin (A) was supplied to a twin-screw extruder and melted and kneaded. Then, in a halfway position of the extruder, a mixture of the bromine-based flame retardant (C1) and the stabilizers (D1) and (D2) was supplied and further melted and kneaded. Note that a weight ratio between the materials was such that (A):(C1):(D1):(D2) = 70:28.5:0.6:0.9, and (A)+(C1)+(D1)+(D2) = 100 wt%. The melted and kneaded product was extruded through a die attached to a tip of the extruder and having small holes, at a discharge rate of 300 kg/hr, to obtain strands of resin (melted and kneaded product). The strands of resin were allowed to cool to solidify in a water tank at 20°C, and then were cut to obtain a masterbatch as a mixture of the bromine-based flame retardant and the thermal stabilizers. In doing so, the temperature of the extruder was set to 170°C. The masterbatch had a bromine content of 18.8 wt%.

(Example 1)

[Preparation of expandable thermoplastic resin particles]

The styrene-based resin (A), the masterbatch (J1), and the graphite masterbatch (I1) were introduced one by one into a blender, and then blended for 10 minutes to produce a resin mixture. The weight ratio between the materials in the resin mixture was such that (A):(J1):(I1) = 78.35:8.35:13.30, and (A)+(J1)+(I1) = 100 wt%.

The resultant resin mixture was supplied to a tandem two-stage extruder, in which a co-rotating twin-screw extruder (first extruder) having a screw diameter of 40 mm and a single-screw extruder (second extruder) having a screw diameter of 90 mm were connected in series. The resin mixture was melted and kneaded with the temperature of the extruder having a screw diameter of 40 mm set to 190°C and at a rotation speed of 150 rpm. In a halfway position of the extruder having a screw diameter of 40 mm (first extruder), 4.3 parts by weight of a mixed pentane [a mixture of 80 wt% of normal pentane (E1) and 20 wt% of isopentane (E2)] and 2.2 parts by weight of isobutane (E3) were injected with respect to 100 parts by weight of the resin mixture. Then, through a continuous pipe which was set to 200°C, the resin mixture was supplied to the extruder (second extruder) having a screw diameter of 90 mm.

The melted and kneaded product was cooled in the extruder (second extruder) having a screw diameter of 90 mm until the resin temperature reached 160°C. Then, through a die attached to a tip of the second extruder set to 250°C and having 60 small holes each having a diameter of 0.65 mm and a land length of 3.0 mm, the melted and kneaded product was extruded in a discharge amount of 50 kg/hour into pressurized circulating water at a temperature of 60°C and 0.8 MPa. The melted and kneaded product thus extruded was cut into particles with use of a rotary cutter, in contact with the die and having 10 blades, under a condition of 1500 rpm, and was transferred to a centrifugal dehydrator. In this way, expandable styrene-based resin particles as expandable thermoplastic resin particles were obtained. Note that the duration of stay in the first extruder was 2 minutes, and the duration of stay in the second extruder was 5 minutes.

0.08 parts by weight of zinc stearate was dry-blended with 100 parts by weight of the obtained expandable styrene-based resin particles, and the resultant product was preserved at 15°C.

[Preparation of pre-expanded particles]

Expandable styrene-based resin particles were prepared, and were preserved at 15°C for 2 weeks. Then, the expandable styrene-based resin particles were introduced to a pre-expanding apparatus [BHP-300, produced by Obiraki Industry Co., Ltd.], and steam at 0.08 MPa was introduced into the pre-expanding apparatus and thereby expansion was caused. In this way, pre-expanded particles having an expansion ratio of 80 times were obtained.

In a similar manner to that described above, pre-expanded particles having an expansion ratio of 50 times were obtained.

[Preparation of foamed molded product]

The obtained pre-expanded particles having an expansion ratio of 80 times were filled into a mold for in-mold molding (length 450 mm × width 310 mm × thickness 25 mm) attached to a molding apparatus for styrene foam [KR-57, produced by Daisen Co., Ltd.]. Steam at 0.06 MPa was introduced and thereby in-mold foaming was caused, and then water was sprayed onto the mold for 3 seconds so as to cool the mold. The styrene-based resin foamed molded product was held inside the mold until a pressure at which the styrene-based resin foamed molded product pushed the mold reached 0.015 MPa (gage pressure). Then, the styrene-based resin foamed molded product was released. In this way, a styrene-based resin foamed molded product having a rectangular parallelepiped shape was obtained. The styrene-based resin foamed molded product had an expansion ratio of 80 times.

The same operation as described above was carried out with use of the pre-expanded particles having an expansion ratio of 50 times, and thereby a styrene-based resin foamed molded product having an expansion ratio of 50 times was obtained.

(Example 2)

The same operation as described in Example 1 was carried out, except that the amount of the styrene-based resin (A) and the amount of the graphite masterbatch (I1) stated in the [Preparation of expandable thermoplastic resin particles] section of Example 1 were changed to 73.35 wt% and 18.30 wt%, respectively, in obtaining a resin mixture. In this way, a styrene-based resin foamed molded product was prepared.

(Example 3)

The same operation as described in Example 1 was carried out, except that the amount of the styrene-based resin (A) and the amount of the graphite masterbatch (I1) stated in the [Preparation of expandable thermoplastic resin particles] section of Example 1 were changed to 69.32 wt% and 22.33 wt%, respectively, in obtaining a resin mixture. In this way, a styrene-based resin foamed molded product was prepared.

(Comparative Example 1)

The same operation as described in Example 1 was carried out, except that the amount of the styrene-based resin (A) was changed to 87.65 wt% and the graphite masterbatch (I1) was changed to 4.00 wt% of the graphite (B1) in the [Preparation of expandable thermoplastic resin particles] section of Example 1 in obtaining a resin mixture. In this way, a styrene-based resin foamed molded product was prepared.

(Comparative Example 2)

The same operation as described in Example 1 was carried out, except that the amount of the styrene-based resin (A) and the amount of the graphite masterbatch (I1) stated in the [Preparation of expandable thermoplastic resin particles] section of Example 1 were changed to 85.98 wt% and 5.67 wt%, respectively, in obtaining a resin mixture. In this way, a styrene-based resin foamed molded product was prepared.

(Reference Example 1)

The same operation as described in Example 1 was carried out, except that the amount of the styrene-based resin (A) was changed to 83.65 wt% and the graphite masterbatch (I1) was changed to 8.00 wt% of the graphite masterbatch (I2) in the [Preparation of expandable thermoplastic resin particles] section of Example 1 in obtaining a resin mixture. In this way, a styrene-based resin foamed molded product was prepared.

(Reference Example 2)

The same operation as described in Example 1 was carried out, except that the amount of the styrene-based resin (A) was changed to 87.65 wt% and the graphite masterbatch (I1) was changed to 4.00 wt% of the graphite (B3) in the [Preparation of expandable thermoplastic resin particles] section of Example 1 in obtaining a resin mixture. In this way, a styrene-based resin foamed molded product was prepared.

The expandable thermoplastic resin particles, pre-expanded particles, and foamed molded products obtained in Examples 1 to 3, Comparative Examples 1 and 2, and Reference Examples 1 and 2 were measured for their physical properties in accordance with the foregoing measurement methods. The results are shown in Table 1.

[Table 1]

| | | | | Example 1 | Example 2 | Example 3 |
|---|---|---|---|---|---|---|
| Physical properties of raw graphite material | Graphite | D10 | $\mu$m | 0.9 | 0.9 | 0.9 |
| | | D50 | $\mu$m | 1.7 | 1.7 | 1.7 |
| | | D90 | $\mu$m | 3.2 | 3.2 | 3.2 |
| | | S | - | 1.3 | 1.3 | 1.3 |
| | Laser scattering intensity per unit solution concentration of graphite | | %/ (mg /ml)/wt% | 9.1 | 9.1 | 9.1 |
| Physical properties of expandable resin particles | Graphite | Contained amount | wt% | 3.7 | 5.2 | 6.3 |
| | | D10 | $\mu$m | 0.6 | 0.6 | 0.6 |
| | | D50 | $\mu$m | 1.1 | 1.1 | 1.3 |
| | | D90 | $\mu$m | 2.4 | 2.5 | 2.9 |
| | | S | - | 1.6 | 1.7 | 1.8 |
| | | D90 (after kneading) / D90 (before kneading | - | 0.7 | 0.8 | 0.9 |
| | Laser scattering intensity per unit solution concentration of graphite | | %/ (mg /ml)/w t% | 12.7 | 12.5 | 12.1 |
| | Laser scattering intensity per unit solution concentration of expandable resin particles | | %/ (mg / ml) | 47.1 | 65.0 | 76.2 |
| Physical properties of pre-expanded particles | Bulk expansion ratio immediately after pre-expansion | | cm$^3$/g | 77.0 | 76.0 | 74.6 |
| | Bulk expansion ratio after aging | | cm$^3$/g | 81.1 | 80.7 | 80.1 |
| | Rate of shrinkage | | % | 5.1 | 5.8 | 6.9 |
| Physical properties of foamed molded product | Expandability and moldability | | - | Good | Good | Good |
| | Thermal conductivity A of molded product having expansion ratio of 80 times | | W/mK | 0.0298 | 0.0296 | 0.0295 |
| | Thermal conductivity B of molded product having expansion ratio of 80 times | | W/mK | 0.0319 | 0.0317 | 0.0314 |
| | Thermal conductivity A of molded product having expansion ratio of 50 times | | W/mK | 0.0277 | 0.0275 | 0.0274 |
| | Thermal conductivity B of molded product having expansion ratio of 50 times | | W/mK | 0.0301 | 0.0299 | 0.0297 |
| | Bromine content | | wt% | 1.5 | 1.5 | 1.5 |
| | Oxygen index | | % | 28 | 28 | 27 |

[Table 2]

| | | | | Com. Ex.1 | Com. Ex.2 | Ref. Ex.1 | Ref. Ex.2 |
|---|---|---|---|---|---|---|---|
| Physical properties of raw graphite material | Graphite | D10 | μm | 0.9 | 0.9 | 2.3 | 2.2 |
| | | D50 | μm | 1.7 | 1.7 | 5.8 | 5.2 |
| | | D90 | μm | 3.2 | 3.2 | 10.8 | 10.5 |
| | | S | - | 1.3 | 1.3 | 1.6 | 1.6 |
| | Laser scattering intensity per unit solution concentration of graphite | | %/(mg / ml) / wt% | 9.1 | 9.1 | 4.0 | 4.8 |
| Physical properties of expandable resin particles | Graphite | Contained amount | wt% | 3.7 | 1.6 | 3.7 | 3.7 |
| | | D10 | μm | 0.8 | 0.6 | 1.9 | 2.0 |
| | | D50 | μm | 2.2 | 1.1 | 5.1 | 5.2 |
| | | D90 | μm | 13.8 | 2.4 | 10.5 | 11.0 |
| | | S | - | 5.9 | 1.6 | 1.7 | 1.7 |
| | | D90 (after kneading) /D90 (before kneading) | - | 4.3 | 0.7 | 1.0 | 1.0 |
| | Laser scattering intensity per unit solution concentration of graphite | | %/(mg /ml)/wt% | 7.3 | 12.9 | 7.2 | 4.9 |
| | Laser scattering intensity per unit solution concentration of expandable resin particles | | %/ (mg / ml) | 27.0 | 20.7 | 26.6 | 18.0 |
| Physical properties of pre-expanded particles | Bulk expansion ratio immediately after pre-expansion | | $cm^3/g$ | 69.4 | 76.9 | 72.4 | 74.1 |
| | Bulk expansion ratio after aging | | $cm^3/g$ | 79.7 | 81.2 | 80.3 | 80.0 |
| | Rate of shrinkage | | % | 12.9 | 5.3 | 9.8 | 7.4 |
| Physical properties of foamed molded product | Expandability and moldability | | - | Good | Good | Good | Good |
| | Thermal conductivity A of molded product having expansion ratio of 80 times | | W/mK | 0.0324 | 0.0313 | 0.0304 | 0.0328 |
| | Thermal conductivity B of molded product having expansion ratio of 80 times | | W/mK | 0.0343 | 0.0335 | 0.0321 | 0.0331 |
| | Thermal conductivity A of molded product having expansion ratio of 50 times | | W/mK | 0.0302 | 0.0289 | 0.0282 | 0.0307 |
| | Thermal conductivity B of molded product having expansion ratio of 50 times | | W/mK | 0.0318 | 0.0313 | 0.0304 | 0.0315 |
| | Bromine content | | wt% | 1.5 | 1.5 | 1.5 | 1.5 |
| | Oxygen index | | % | 28 | 28 | 28 | 28 |
| Note: Com.Ex. stands for Comparative Example, Ref.Ex. stands for Reference Example. | | | | | | | |

As shown in Table 1, with regard to Examples 1 to 3, the thermal conductivity B is 0.0297 W/mK to 0.0301 W/mK when the expansion ratio is 50 times, and thus Examples 1 to 3 were found to have lower thermal conductivity than Comparative Examples 1 and 2. The thermal conductivity B of each of Example 1 to 3 when the expansion ratio is 80 times is 0.0314 W/mK to 0.0319 W/mK, and thus Examples 1 to 3 were found to have lower thermal conductivity than Comparative Examples 1 and 2. This demonstrates that the following expandable thermoplastic resin particles, pre-expanded particles obtained through pre-expansion of the expandable thermoplastic resin particles, and a thermoplastic resin foamed molded product have high expandability and high heat insulating property: expandable thermoplastic resin particles containing graphite, a thermoplastic resin, and a blowing agent, in which the contained amount of the graphite contained in the expandable thermoplastic resin particles with respect to 100 wt% of the expandable thermoplastic resin particles is not less than 2.0 wt% and not more than 10.0 wt%, in which the graphite in the expandable thermoplastic resin particles has a mean particle size of not less than 0.5 $\mu$m and less than 2.5 $\mu$m, and in which span "S", which indicates the spread of particle size distribution of the graphite in the expandable thermoplastic resin particles, is not more than 4.0.

With regard to Reference Examples 1 and 2 in which graphite having a mean particle size of greater than 2.5 $\mu$m was used, the span "S" of the raw material graphite and the span "S" of the graphite in the expandable resin particles were substantially the same. This indicates that aggregates do not appear to have been generated when the resin mixture was kneaded.

On the other hand, with regard to the expandable thermoplastic resin particles of Comparative Example 1 in which graphite having a mean particle size of less than 2.5 $\mu$m was used, although the value of span of the raw material graphite used was low, the span and D90 of graphite in the expandable thermoplastic resin particles increased. This indicates that aggregates were generated when the resin mixture was kneaded. It is inferred that, as a result, the rate of shrinkage of pre-expanded particles produced from the expandable thermoplastic resin particles of Comparative Example 1 is higher than those of the expandable thermoplastic resin particles of Reference Examples 1 and 2, and the heat insulating property is lower in Comparative Example 1 than Reference Examples 1 and 2, despite that graphite having a small mean particle size is used in the expandable thermoplastic resin particles of Comparative Example 1.

It is apparent from a comparison between Examples 1 to 3 and Comparative Example 1 that the expandable thermoplastic resin particles of Examples, which satisfy the value of span "S" of the present invention, thereby achieve thermal conductivity equivalent to or lower than that of the foamed molded product of Reference Example 1, despite that graphite has a mean particle size of not less than 0.5 $\mu$m and less than 2.5 $\mu$m.

Furthermore, with regard to the expandable thermoplastic resin particles of Examples 1 to 3, the rate of shrinkage of the expandable thermoplastic resin particles obtained is equivalent to or lower than that of Reference Example 2. This indicates that high expandability, which is supposed to be achieved by graphite having a mean particle size of less than 2.5 $\mu$m, can be achieved.

Moreover, in Examples 1 to 3, graphite having a mean particle size of not less than 0.5 $\mu$m and less than 2.5 $\mu$m (small particle size) is used and graphite in the expandable thermoplastic resin particles has narrow particle size distribution, and therefore shelf life can be prolonged and even higher expansion ratio can be achieved. This indicates that, according to expandable thermoplastic resin particles in accordance with the present invention, it is possible to produce a foamed molded product having both high expandability and high heat insulating property.

Fig. 1 is an SEM image of a cut surface of a pressed product obtained by pressing the foamed molded product prepared in Comparative Example 1. Cross sections of graphite particles on the cut surface are seen in the SEM image. Fig. 2 is an SEM image of a cut surface of a pressed product obtained by pressing the foamed molded product prepared in Example 1. Cross sections of graphite particles on the cut surface are seen in the SEM image. Fig. 1 indicates that, in Comparative Example 1, coarse graphite aggregates were present in the expandable thermoplastic resin particles obtained through kneading. On the contrary, Fig. 2 indicates that, in Example 1, coarse graphite aggregates were not present in the expandable thermoplastic resin particles obtained through kneading. It is apparent from above that, in Example 1, despite that graphite having a mean particle size of less than 2.5 $\mu$m was used, the generation of coarse aggregates, which were not present in graphite before kneading, has been reduced.

All of the above embodiments are merely illustrative of one embodiment of the present invention, and are in no way intended to limit the embodiment of the present invention thereto. One embodiment of the present invention can be altered in many ways by a skilled person, and therefore the scope of the embodiment of the present invention is defined only by the claims and equivalents thereof.

Industrial Applicability

Expandable thermoplastic resin particles in accordance with an embodiment of the present invention have high expandability and high heat insulating property. Thermoplastic resin pre-expanded particles and a thermoplastic resin foamed molded product in accordance with an embodiment of the present invention each have high expansion ratio and high heat insulating property. Therefore, an embodiment of the present invention significantly reduces an increase over time in thermal conductivity, and provides high heat insulating property over a long period of time. Accordingly, an embodiment of the present invention is suitably applicable to, e.g., a food container box, a cool box, a cushioning material, and a heat insulating material for a house.

**Claims**

1. Expandable thermoplastic resin particles comprising graphite, a thermoplastic resin, and a blowing agent, wherein:

   a contained amount of the graphite is not less than 2.0 wt% and not more than 10.0 wt% with respect to 100 wt% of the expandable thermoplastic resin particles;
   the graphite in the expandable thermoplastic resin particles has a mean particle size of not less than 0.5 $\mu$m and less than 2.5 $\mu$m; and
   span "S", which indicates a spread of particle size distribution of the graphite in the expandable thermoplastic resin particles and which is represented by the following equation (1), is not more than 4.0:

$$S = (D90\text{-}D10)/D50 \ldots \text{Equation (1)},$$

   where S represents the span indicative of the spread of the particle size distribution of the graphite, D90 represents 90% volume cumulative particle size, D10 represents 10% volume cumulative particle size, and D50 represents 50% volume cumulative particle size, the 50% volume cumulative particle size being the mean particle size, wherein measurement and analysis of particle size distribution are performed by laser diffractometry based on Mie theory in accordance with ISO13320:2009, JIS Z8825:2013,
   wherein a laser scattering intensity per unit solution concentration of the graphite in the expandable thermoplastic resin particles is not less than 11 {%/(mg/ml)}/wt%, wherein the laser scattering intensity per unit solution concentration of the graphite is determined by: dividing a laser scattering intensity Ob (%) by a unit solution concentration (mg/ml) to obtain a quotient; and further dividing the quotient by the amount (wt%) of the graphite contained in the expandable thermoplastic resin particles,
   the laser scattering intensity Ob (%) is determined by the following equation: Ob (%) = (1 - Ls / Lb) $\times$ 100,
   where Ls is the intensity of light transmitted through a solution that contains the expandable thermoplastic resin particles and a solvent, this intensity being measured by laser diffractometry using a laser beam at a wavelength of 632.8 nm, and
   Lb is the intensity of light transmitted through the solvent measured by the laser diffractometry, and
   where the unit solution concentration is the concentration of the expandable thermoplastic resin particles in the solution.

2. The expandable thermoplastic resin particles according to claim 1, wherein a value obtained by dividing the D90 of the graphite in the expandable thermoplastic resin particles by D90 of graphite before kneading is not more than 2.0.

3. The expandable thermoplastic resin particles according to claim 1 or 2, wherein the thermoplastic resin contains a styrene-based resin.

4. The expandable thermoplastic resin particles according to any one of claims 1 to 3 wherein the blowing agent contains at least two selected from the group consisting of C4-C6 hydrocarbons, and one of the at least two is a C4 or C5 hydrocarbon.

5. The expandable thermoplastic resin particles according to any one of claims 1 to 4, wherein a thermoplastic resin foamed molded product obtained by molding the expandable thermoplastic resin particles has a thermal conductivity of not more than 0.0310 W/mK, wherein the thermal conductivity is measured as follows: the expandable thermoplastic resin particles are molded to obtain the thermoplastic resin foamed molded product having an expansion ratio of 50 times; the thermoplastic resin foamed molded product is allowed to stand at a temperature of 50°C for 30 days and further allowed to stand at a temperature of 23°C for 24 hours; and then the thermal conductivity of the thermoplastic resin foamed molded product, is measured at a central temperature of 23°C in accordance with JIS A9511:2006R.

6. Thermoplastic resin pre-expanded particles obtained by pre-expanding the expandable thermoplastic resin particles recited in any one of claims 1 to 5.

7. A thermoplastic resin foamed molded product obtained by molding the thermoplastic resin pre-expanded particles recited in claim 6.

8. The thermoplastic resin foamed molded product according to claim 7, wherein the thermoplastic resin foamed molded product has an expansion ratio of not less than 50 times (cm³/g), measurement of the expansion ratio being carried out in accordance with the following:
a sample having a size of length 300 mm × width 300 mm × thickness 25 mm is cut from the foamed molded product; the weight (g) of the sample was measured; and a longitudinal size, a lateral size, and a thickness size were measured with use of a vernier caliper; on the basis of the sizes thus measured, the volume (cm³) of the sample was calculated, and expansion ratio was calculated in accordance with the following calculation equation:

Expansion ratio (cm³ / g) = sample volume (cm³) / weight of sample (g).

## Patentansprüche

1. Expandierbare thermoplastische Harzpartikel, die Graphit, ein thermoplastisches Harz und ein Treibmittel aufweisen, wobei:

   die enthaltene Menge an Graphit nicht weniger als 2,0 Gew.-% und nicht mehr als 10,0 Gew.-%, bezogen auf 100 Gew.-% der expandierbaren thermoplastischen Harzpartikel, beträgt;
   der Graphit in den expandierbaren thermoplastischen Harzpartikeln eine mittlere Partikelgröße von nicht weniger als 0,5 $\mu$m und weniger als 2,5 $\mu$m aufweist; und
   die Variationsbreite "S", die eine Streuung der Partikelgrößenverteilung des Graphits in den expandierbaren thermoplastischen Harzpartikeln angibt und durch die folgende Gleichung (1) repräsentiert wird, nicht mehr als 4,0 beträgt:

$$S = (D90\text{-}D10)/D50 \ ... \ \text{Gleichung (1)},$$

   wobei S die Variationsbreite repräsentiert, die die Streuung der Partikelgrößenverteilung des Graphits darstellt, D90 die kumulative Partikelgröße von 90 Vol.-% darstellt, D10 die kumulative Partikelgröße von 10 Vol.-% darstellt und D50 die kumulative Partikelgröße von 50 Vol.-% darstellt, wobei die kumulative Partikelgröße von 50 % des Volumens die mittlere Partikelgröße ist, wobei die Messung und Analyse der Partikelgrößenverteilung mittels Laserdiffraktometrie basierend auf der Mie-Theorie gemäß ISO 13320:2009, JIS Z8825:2013 durchgeführt wird,
   wobei die Laserstreuungsintensität pro Einheitslösungskonzentration des Graphits in den expandierbaren thermoplastischen Harzpartikeln nicht weniger als 11 {%/ (mg/ml)}/Gew.-% beträgt, wobei die Laserstreuintensität pro Einheit der Lösungskonzentration des Graphits bestimmt wird, indem die Laserstreuintensität Ob (%) durch die Einheit der Lösungskonzentration (mg/ml) dividiert wird, um einen Quotienten zu erhalten, und der Quotient ferner durch die Menge (Gew.-%) des in den expandierbaren thermoplastischen Harzpartikeln enthaltenen Graphits dividiert wird, wobei
   die Laserstreuintensität Ob (%) durch die folgende Gleichung bestimmt wird: Ob (%) = (1 - Ls / Lb) × 100,
   wobei Ls die Intensität von Licht ist, das durch eine Lösung durchgelassen wird, die die expandierbaren thermoplastischen Harzpartikel und ein Lösungsmittel enthält, wobei diese Intensität durch Laserdiffraktometrie unter Verwendung eines Laserstrahls mit einer Wellenlänge von 632,8 nm gemessen wird, und
   Lb die Intensität von Licht ist, das durch das Lösungsmittel durchgelassen wird, gemessen durch die Laserdiffraktometrie, und
   wobei die Einheitslösungskonzentration die Konzentration der expandierbaren thermoplastischen Harzpartikel in der Lösung ist.

2. Expandierbare thermoplastische Harzpartikel nach Anspruch 1, wobei ein Wert, der durch Division von D90 des Graphits in den expandierbaren thermoplastischen Harzpartikeln durch D90 des Graphits vor dem Kneten erhalten wird, nicht mehr als 2,0 beträgt.

3. Expandierbare thermoplastische Harzpartikel nach Anspruch 1 oder 2, wobei das thermoplastische Harz ein Harz auf Styrolbasis enthält.

4. Expandierbare thermoplastische Harzpartikel nach einem der Ansprüche 1 bis 3, wobei das Treibmittel mindestens zwei aus der Gruppe enthält, die aus C4-C6-Kohlenwasserstoffen besteht, und einer der mindestens zwei ein C4- oder C5-Kohlenwasserstoff ist.

**5.** Expandierbare thermoplastische Harzpartikel nach einem der Ansprüche 1 bis 4, wobei ein thermoplastisches Harzschaumformteil, das durch Formen der expandierbaren thermoplastischen Harzpartikel erhalten wird, eine Wärmeleitfähigkeit von nicht mehr als 0,0310 W/mK aufweist, wobei die Wärmeleitfähigkeit wie folgt gemessen wird: die expandierbaren thermoplastischen Harzpartikel werden geformt, um das thermoplastische Harzschaumformteil mit einem Expansionsverhältnis von 50 zu erhalten; das thermoplastische Harzschaumformteil wird 30 Tage lang bei einer Temperatur von 50 °C und anschließend 24 Stunden lang bei einer Temperatur von 23 °C gelagert; und dann wird die Wärmeleitfähigkeit des thermoplastischen Harzschaumformteils bei einer mittleren Temperatur von 23 °C nach JIS A9511:2006R gemessen.

**6.** Vorexpandierte thermoplastische Harzpartikel, die durch Vorexpandieren der expandierbaren thermoplastische Harzpartikel nach einem der Ansprüche 1 bis 5 erhalten werden.

**7.** Thermoplastisches Harzschaumformteil, das durch Formen der vorexpandierten thermoplastischen Harzpartikel mach Anspruch 6 erhalten wird.

**8.** Thermoplastisches Harzschaumformteil nach Anspruch 7, wobei das thermoplastische Harzschaumformteil ein Expansionsverhältnis von nicht weniger als 50 (cm$^3$/g) aufweist, wobei die Messung des Expansionsverhältnisses gemäß dem Folgenden durchgeführt wird:

es wird eine Probe mit einer Größe von 300 mm Länge × 300 mm Breite × 25 mm Dicke aus dem Schaumformteil geschnitten; das Gewicht (g) der Probe wurde gemessen; und die longitudinale Größe, die laterale Größe und die Dicke werden mit einem Messschieber gemessen; auf der Grundlage der so gemessenen Größen wird das Volumen (cm$^3$) der Probe berechnet, und das Expansionsverhältnis wird nach der folgenden Berechnungsgleichung berechnet:

$$\text{Expansionsverhältnis (cm}^3 / \text{g)} = \text{Probenvolumen (cm}^3) / \text{Gewicht der Probe (g)}.$$

## Revendications

**1.** Particules de résine thermoplastique expansible contenant du graphite, une résine thermoplastique et un agent d'expansion, où :

la teneur du graphite contenu n'est pas inférieure à 2,0 % en poids et n'est pas supérieure à 10,0 % en poids par rapport à 100 % en poids des particules de résine thermoplastique expansible ; le graphite dans les particules de résine thermoplastique expansible a un diamètre de particule moyen non inférieur à 0,5 μm et inférieur à 2,5 μm ; et l'amplitude « S », qui indique la dispersion de la distribution granulométrique du graphite dans les particules de résine thermoplastique expansible et qui est représentée par la formule (1) suivante, n'est pas supérieure à 4,0 :

$$S = (D90\text{-}D10)/D50 \ ... \ \text{Formule (1)},$$

où S représente l'amplitude indiquant la dispersion de la distribution granulométrique du graphite, D90 représente le diamètre de particule en volume cumulé de 90 %, D10 représente le diamètre de particule en volume cumulée de 10 %, et D50 représente le diamètre de particule en volume cumulé de 50 %, le diamètre de particule en volume cumulé de 50 % étant le diamètre moyen des particules, la mesure et l'analyse de la distribution granulométrique étant effectuées par diffractométrie laser sur la base de la théorie de Mie conformément aux normes ISO 13320:2009, JIS Z8825:2013, où l'intensité de diffusion laser par unité de concentration en solution du graphite dans les particules de résine thermoplastique expansible n'est pas inférieure à 11 {%/ (mg/ml)}/wt%, l'intensité de diffusion laser par unité de concentration en solution du graphite étant déterminée par : division de l'intensité de diffusion laser Ob (%) par une unité de concentration en solution (mg/ml) pour obtenir un quotient ; puis par division du quotient par la teneur (wt%) du graphite contenu dans les particules de résine thermoplastique expansible, l'intensité de diffusion laser Ob (%) étant déterminée par la formule suivante : Ob (%) = (1 - Ls / Lb) × 100, où Ls est l'intensité de la lumière transmise à travers une solution contenant les particules de résine thermoplastique expansible et un solvant, ladite intensité étant mesurée par diffractométrie laser au moyen d'un faisceau laser à une longueur d'onde de 632,8 nm, et Lb est l'intensité de la lumière transmise à travers le solvant mesurée par diffractométrie laser, et

où l'unité de concentration en solution est la concentration des particules de résine thermoplastique expansible dans la solution.

2.  Particules de résine thermoplastique expansible selon la revendication 1, où une valeur obtenue par division du D90 du graphite dans les particules de résine thermoplastique expansible par le D90 du graphite avant malaxage n'est pas supérieure à 2,0.

3.  Particules de résine thermoplastique expansible selon la revendication 1 ou la revendication 2, où la résine thermoplastique contient une résine à base de styrène.

4.  Particules de résine thermoplastique expansible selon l'une des revendications 1 à 3, où l'agent d'expansion contient au moins deux éléments sélectionnés dans le groupe comprenant des hydrocarbures en C4-C6, et où un desdits au moins deux éléments est un hydrocarbure en C4 ou C5.

5.  Particules de résine thermoplastique expansible selon l'une des revendications 1 à 4, où un produit moulé en résine thermoplastique expansée obtenu par moulage des particules de résine thermoplastique expansible a une conductivité thermique ne dépassant pas 0,0310 W/mK, la conductivité thermique étant mesurée comme suit : les particules de résine thermoplastique expansible sont moulées pour obtenir le produit moulé en résine thermoplastique expansée ayant un taux d'expansion de 50 fois ; le produit moulé en résine thermoplastique expansée est laissé au repos à une température de 50 °C pendant 30 jours, puis à une température de 23 °C pendant 24 heures ; puis la conductivité thermique du produit moulé en résine thermoplastique expansée est mesurée à une température centrale de 23 °C conformément à la norme JIS A9511:2006R.

6.  Particules de résine thermoplastique pré-expansée obtenues par pré-expansion des particules de résine thermoplastique expansible selon l'une des revendications 1 à 5.

7.  Produit moulé en résine thermoplastique expansée obtenu par moulage des particules de résine thermoplastique pré-expansées selon la revendication 6.

8.  Produit moulé en résine thermoplastique expansée selon la revendication 7, ledit produit moulé en résine thermoplastique expansée ayant un taux d'expansion pas inférieur à 50 ($cm^3$/g), la mesure du taux d'expansion étant effectuée comme suit :
    un échantillon d'une dimension de 300 mm en longueur $\times$ 300 mm en largeur $\times$ 25 mm en épaisseur est découpé dans le produit moulé expansé ; le poids (g) de l'échantillon est mesuré ; et la dimension longitudinale, la dimension latérale et l'épaisseur sont mesurées au moyen d'un pied à coulisse ; sur la base des dimensions ainsi mesurées, le volume ($cm^3$) de l'échantillon est calculé, et le taux d'expansion est calculé conformément à la formule de calcul suivante :

$$\text{Taux d'expansion } (cm^3 / g) = \text{volume de l'échantillon } (cm^3) / \text{poids de l'échantillon } (g).$$

FIG. 1

EHT = 5.00 kV    Mag =  5.00 K X    WD = 4.5 mm    Signal A = SE2    ESB Grid =  500 V    2 µm

FIG. 2

EHT = 5.00 kV    Mag = 5.00 K X    WD = 4.4 mm    Signal A = SE2    ESB Grid = 500 V    2 µm

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017043618 A
- JP 2013075941 A
- JP 2005002268 A
- JP 2005506390 W, Tokuhyo
- WO 2017043618 A1, KANEKA CORP
- JP 2009516019 W, Tokuhyo